# EUROPEAN PATENT APPLICATION

(11) **EP 4 657 821 A1**
(43) Date of publication of application: **03.12.2025**
(21) Application number: 25173211.1
(22) Date of filing: 29.04.2025
(51) Int. Cl.: H04L 45/00, H04L 49/00, H04L 49/90

(54) **ETHERNET VIRTUAL PRIVATE NETWORK BASED FABRIC CONGESTION MANAGEMENT**

(30) Priority: 31.05.2024 US 202418731042
(71) Applicant: Cisco Technology, Inc., San Jose, CA 95134-1706 (US)
(72) Inventor: SAJASSI, Ali, San Ramon, CA (US); LO, Jeffrey Yi Dar, Cupertino, CA (US); BHAGWATULA, Praveen, Cary, NC (US)
(74) Representative: Mathys & Squire

(57) **Abstract**

Devices, systems, methods, and processes for fabric congestion management are described herein. At each ingress switch, virtual output ("VO") queues are created for egress ports based on identifiers, state indicators, and encapsulation values of the egress ports received via an Ethernet Virtual Private Network ("EVPN") control plane. When a data packet is received at the ingress switch, an egress port for the data packet is determined, an identifier and an encapsulation value of the egress port are added to the data packet, and the data packet is stored in a corresponding VO queue. The data packet remains at the ingress switch until an egress switch is available. At the egress switch, one or more tags are added in the data packet based on the encapsulation value, whereas the destination egress port is identified based on the identifier. Thus, a quick egress through the egress switch is achieved.

## Description

The present disclosure relates to communications. More particularly, the present disclosure relates to Ethernet Virtual Private Network ("EVPN") based fabric congestion management.

### BACKGROUND

In today's interconnected world, the efficiency and reliability of data communication network fabrics are of utmost importance. A network fabric includes various interconnected switches, for example, spine switches and leaf switches. In a typical network topology, graphics processing units ("GPUs") are coupled to various leaf switches, which in turn are coupled to different spine switches. Data flows between GPUs and leaf switches, as well as between leaf and spine switches. Within this topology, GPUs connected to one leaf switch communicate with those connected to other leaf switches through the leaf-spine architecture. The efficacy of various applications, such as artificial intelligence applications, running on GPUs relies heavily on the smooth flow of traffic within the network fabric. Consequently, a primary requirement for the network fabric is to support elephant flows without congestion.

For inter-GPU communication, one leaf switch functions as an ingress switch, while another serves as an egress switch. The GPU initiating the communication is coupled to the ingress switch and transmits multiple data packets to the ingress switch. Traditionally, the ingress switch determines the destination (e.g., the egress switch) of the data packets and forwards the data packets to the egress switch via a spine switch. Upon receipt, the egress switch identifies one or more egress ports via which the data packets are to be forwarded outside the network fabric to the relevant GPUs. Moreover, the egress switch is tasked with identifying the specific tagging operations necessary for the data packets and executing these operations on the data packets to render them suitable for forwarding to the relevant GPUs.

Typically, the ingress switch forwards the data packets without explicit awareness of the availability of the egress ports. As a result, at any given time, numerous data packets are stuck in the network fabric (e.g., at spine switches and egress switches) that can lead to significant congestion. Furthermore, the determination of the appropriate egress port (via additional lookup) and the necessary tagging operations at the egress switch can contribute to processing delays, further exacerbating end-to-end delay. Consequently, the network fabric's efficiency and the performance of applications running on GPUs connected via the network fabric suffer.

### SUMMARY OF THE DISCLOSURE

Aspects of the invention are set out in the independent claims and preferred features are set out in the dependent claims. Features of one aspect may be applied to each aspect alone or in combination with other features.

Systems and methods for Ethernet Virtual Private Network ("EVPN") based fabric congestion management in accordance with embodiments of the disclosure are described herein. In some embodiments, a device comprises means for receiving a set of identifiers from at least one network device; means for detecting, based on the set of identifiers, one or more egress ports associated with the at least one network device; and means for creating, in response to the detection of the one or more egress ports, a virtual output ("VO") queue for at least one egress port of the one or more egress ports.

In some embodiments, a device includes a processor, a network interface controller configured to provide access to a network, and a memory communicatively coupled to the processor, wherein the memory includes a congestion management logic that is configured to receive a set of identifiers from at least one network device, detect, based on the set of identifiers, one or more egress ports associated with the at least one network device, and create, in response to the detection of the one or more egress ports, a virtual output ("VO") queue for at least one egress port of the one or more egress ports.

In some embodiments, an identifier of the set of identifiers corresponds to a system port identifier of an egress port of the one or more egress ports.

In some embodiments, the set of identifiers is received with an Ethernet Auto-Discovery (AD) per Ethernet Segment (ES) route.

In some embodiments, the set of identifiers is received with the Ethernet AD per ES route by way of one of an EVPN border gateway protocol ("BGP") extended community or an EVPN BGP attribute.

In some embodiments, the congestion management logic is further configured to receive a state indicator from the at least one network device, and detect, based on the state indicator, an operational state of the at least one egress port.

In some embodiments, the state indicator is received with the set of identifiers and an Ethernet AD per ES route.

In some embodiments, the state indicator is received with the set of identifiers and the Ethernet AD per ES route by way of one of an EVPN BGP extended community or an EVPN BGP attribute.

In some embodiments, the congestion management logic is further configured to receive an encapsulation value from the at least one network device, and wherein the encapsulation value is configured to signal one or more tagging operations to be performed for egress port transmission.

In some embodiments, the encapsulation value is received with the set of identifiers and an Ethernet AD per ES route.

In some embodiments, the encapsulation value is received with the set of identifiers and the Ethernet AD per ES route by way of one of an EVPN BGP extended community or an EVPN BGP attribute.

In some embodiments, the congestion management logic is further configured to receive a data packet associated with the at least one egress port, identify the VO queue created for the at least one egress port, and store the data packet in the VO queue.

In some embodiments, in response to receiving the data packet, the congestion management logic is further configured to determine an operational state of the at least one egress port.

In some embodiments, the data packet is stored in the VO queue in response to determining that the at least one egress port is operational.

In some embodiments, in response to receiving the data packet and prior to storing the data packet in the VO queue, the congestion management logic is further configured to add one of the set of identifiers associated with the at least one egress port to a header of the data packet.

**In** some embodiments, in response to receiving the data packet and prior to storing the data packet in the VO queue, the congestion management logic is further configured to add an encapsulation value associated with the at least one egress port to a header of the data packet.

**In** some embodiments, the congestion management logic is further configured to receive a token for transmission of the stored data packet, and forward the data packet stored in the VO queue to the at least one network device.

**In** some embodiments, the congestion management logic is further configured to receive a delete indication, wherein the delete indication is configured to signal de-configuration of the at least one egress port, and delete, in response to the delete indication, the VO queue created for the at least one egress port.

**In** some embodiments, at least one egress port is one of a physical port or a logical port.

**In** some embodiments, a device having a network interface controller configured to provide access to a network, at least one egress port and an egress queue associated with the at least one egress port, comprises: means for receiving a data packet, wherein a header of the data packet comprises an identifier and an encapsulation value; means for adding one or more tags in the data packet based on the encapsulation value; and means for storing, based on the identifier, the data packet with the one or more tags in the egress queue associated with the at least one egress port.

In some embodiments, a congestion management logic is configured to receive a data packet, wherein a header of the data packet includes an identifier and an encapsulation value, add one or more tags in the data packet based on the encapsulation value, and store, based on the identifier, the data packet with the one or more tags in the egress queue associated with the at least one egress port.

In some embodiments, a method includes receiving a set of identifiers from at least one network device, detecting, based on the set of identifiers, one or more egress ports associated with the at least one network device, and creating, in response to the detection of the one or more egress ports, a virtual output (VO) queue for at least one egress port of the one or more egress ports.

Systems and apparatus comprising means for implementing the methods described herein, including network nodes, computer programs, computer program products, computer readable media and logic encoded on tangible media for implementing the methods are also described.

Other objects, advantages, novel features, and further scope of applicability of the present disclosure will be set forth in part in the detailed description to follow, and in part will become apparent to those skilled in the art upon examination of the following or may be learned by practice of the disclosure. Although the description above contains many specificities, these should not be construed as limiting the scope of the disclosure but as merely providing illustrations of some of the presently preferred embodiments of the disclosure. As such, various other embodiments are possible within its scope. Accordingly, the scope of the disclosure should be determined not by the embodiments illustrated, but by the appended claims and their equivalents.

### BRIEF DESCRIPTION OF DRAWINGS

The above, and other, aspects, features, and advantages of several embodiments of the present disclosure will be more apparent from the following description as presented in conjunction with the following several figures of the drawings.
FIG. 1 is a schematic block diagram of an example architecture for a network fabric in accordance with various embodiments of the disclosure;
FIG. 2 is a schematic block diagram of an example computing system that employs fabric congestion management in accordance with various embodiments of the disclosure;
FIG. 3 is a schematic block diagram of an example egress switch broadcast in accordance with various embodiments of the disclosure;
FIG. 4 is a flowchart depicting a process for implementing virtual output ("VO") queues in ingress switches in accordance with various embodiments of the disclosure;
FIG. 5 is a flowchart depicting a process for facilitating VO queue implementation by egress switches in accordance with various embodiments of the disclosure;
FIG. 6 is a flowchart depicting a process for implementing data packet traversal at ingress switches in accordance with various embodiments of the disclosure;
FIG. 7 is a flowchart depicting a process for implementing data packet traversal at egress switches in accordance with various embodiments of the disclosure; and
FIG. 8 is a conceptual block diagram for one or more devices capable of executing components and logic for implementing the functionality and embodiments described above.

Corresponding reference characters indicate corresponding components throughout the several figures of the drawings. Elements in the several figures are illustrated for simplicity and clarity and have not necessarily been drawn to scale. For example, the dimensions of some of the elements in the figures might be emphasized relative to other elements for facilitating understanding of the various presently disclosed embodiments. In addition, common, but well-understood, elements that are useful or necessary in a commercially feasible embodiment are often not depicted in order to facilitate a less obstructed view of these various embodiments of the present disclosure.

### DETAILED DESCRIPTION

In response to the issues described above, devices and methods are discussed herein that facilitate fabric congestion management using Ethernet Virtual Private Network ("EVPN"). In numerous embodiments, a spine switch may be coupled to multiple leaf switches and each leaf switch may be coupled to multiple endpoint devices (e.g., graphics processing units).

Disaggregated Scheduled Fabric ("DSF") with EVPN control plane is implemented for fabric congestion management in the present disclosure. DSF refers to a networking architecture where the entire network (consisting of leaf and spine switches) acts as a single logical switch. In such cases, the leaf switches can be considered as disaggregated line cards of the logical switch and the data traffic from the ingress leaf switch (ingress line card) to the egress leaf switch (egress line card) is scheduled to avoid congestion in the fabric. The control plane functions can be distributed across multiple network devices based on EVPN standards with additional enhancements described here allowing for greater flexibility and scalability in network design. EVPN is a network technology designed to provide a scalable, multi-tenant, and interoperable solution. Various features of EVPN include media access control ("MAC") and Internet protocol ("IP") mobility, Layer 2 and Layer 3 virtual private network ("VPN") services, border gateway protocol ("BGP") - based control plane, flexible multi-homing, integrated routing and bridging, MAC learning and distribution in the control plane, or the like. In the present disclosure, various features of the EVPN are combined with the DSF to improve congestion management in the network fabric.

To enable fabric congestion management, each leaf switch may include an egress manager, an ingress manager, and one or more virtual output ("VO") queues. Each leaf switch may further include various egress ports (e.g., via which data packets are forwarded outside the network fabric and to relevant endpoint devices). Each egress port may be associated with an egress queue that is configured to store data packets prior to egress via the egress port. In many embodiments, the egress queues are smaller in size than the VO queues.

In a number of embodiments, each egress port is a physical port and each egress queue is a physical port queue. In a variety of embodiments, each egress port is a logical port and each egress queue is a logical port queue. In some embodiments, some egress ports are physical ports, whereas the remaining egress ports are logical ports. Further, some egress queues are physical port queues, whereas the remaining egress queues are logical port queues.

The number of VO queues in each leaf switch is equal to the number of egress ports in the network fabric. The VO queues are queues for egress ports of egress switches but they are located on the ingress switches. The egress managers, the ingress managers, and the VO queues enable congestion management within the network fabric.

An egress manager may identify one or more egress ports present (e.g., configured) in the corresponding leaf switch. Each egress port has a unique system port identifier ("SPID"). In more embodiments, the SPID is a 32-bit integer. Further, the egress manager may determine an operational state of each egress port and generate a state indicator indicative of the determined operational state. The operational state may be active or inactive. In additional embodiments, the state indicator is an 8-bit integer. The egress manager may determine one or more tagging operations to be performed for transmission over each egress port and generate an encapsulation value indicative of the determined one or more tagging operations. The one or more tagging operations may correspond to virtual local access network ("VLAN") acrobats (e.g., VLAN-tag translation, double-tag or 802.1Q Tunneling ("QinQ") imposition, or the like). In further embodiments, the encapsulation value is a 32-bit integer.

The egress manager of each leaf switch may broadcast the corresponding SPIDs, state indicators, and encapsulation values. In some examples, the corresponding SPIDs, state indicators, and encapsulation values are broadcasted along with an Ethernet Auto-Discovery (AD) per Ethernet Segment (ES) route. The Ethernet AD per ES route is a route type-1 EVPN route. The broadcast (e.g., advertisement) of the Ethernet AD per ES route along with the SPIDs, state indicators, and encapsulation values enables the detection of the egress ports by other leaf switches within the network fabric.

The broadcast may be executed, for example, in two ways. In still more embodiments, each egress manager may broadcast the corresponding SPIDs, state indicators, and encapsulation values along with an Ethernet AD per ES route by way of an EVPN BGP extended community ("EC"). In still further embodiments, each egress manager may broadcast the corresponding SPIDs, state indicators, and encapsulation values along with an Ethernet AD per ES route by way of an EVPN BGP attribute.

An ingress manager of an ingress switch (e.g., a leaf switch) may receive a set of SPIDs, a set of state indicators, and a set of encapsulation values, for example, with an Ethernet AD per ES route from one or more network devices (e.g., from egress managers of one or more leaf switches). A SPID may be configured to indicate an egress port that is present at an egress switch, a state indicator may be configured to signal an operational state of the egress port, and an encapsulation value may be configured to signal one or more tagging operations to be performed for egress port transmission.

Based on the received SPIDs, the ingress manager may detect one or more egress ports associated with each leaf switch. In response to the detection of the one or more egress ports, the ingress manager may create a VO queue for each egress port. Based on the received state indicators, the ingress manager may detect operational states of the one or more egress ports, and enable/disable the corresponding VO queues for data packet storing based on the detected operational states. The creation of the VO queues ensures that the network fabric is better equipped to handle congestion.

In numerous additional embodiments, one endpoint device may be communicating with another endpoint device. For communication, a source endpoint device may generate one or more data packets and transmit the one or more data packets to an ingress switch. Thus, the ingress manager of the ingress switch may receive a data packet from the source endpoint device. The ingress manager may determine a destination egress port for the data packet and identify a VO queue created for the destination egress port. Further, the ingress manager may determine the operational state of the destination egress port (e.g., determine whether the identified VO queue is enabled for data packet storing). If the identified VO queue is disabled for data packet storing, the data packet may be dropped. Conversely, if the identified VO queue is enabled for data packet storing, the ingress manager may store the data packet in the identified VO queue.

In still additional embodiments, prior to storing the data packet, the ingress manager may add the SPID of the destination egress port to a header of the data packet. In some more embodiments, prior to storing the data packet, the ingress manager may add the encapsulation value of the destination egress port to the header of the data packet. The stored data packet may thus include all the necessary information for a smooth and quick egress through the egress switch. The data packet is stored at the ingress switch until the egress switch is available for transmission. The storing of the data packet at the ingress switch until the egress switch is available for transmission ensures that the congestion in the network fabric (e.g., spine switches and egress switches) is reduced.

An egress manager of the egress switch may determine the availability of the egress switch. The availability determination may be executed in a periodic manner or in response to one or more triggers (e.g., reception of data packets at ingress switches). When the egress switch is available for transmission, the egress manager may generate and transmit a token to the ingress switch (e.g., the ingress manager of the ingress switch). The token may be configured to indicate the availability of the egress switch for data packet transmission. In certain embodiments, the token can correspond to an integer number of bytes for transmission. Based on the received token, the ingress manager may forward the data packet stored in the VO queue to the egress switch (e.g., the egress manager of the egress switch).

Thus, in response to the token, the egress manager may receive the data packet. The header of the data packet comprises the SPID and the encapsulation value of the destination egress port. Based on the encapsulation value, the egress manager may add one or more tags in the data packet. The addition of the one or more tags renders the data packet suitable for forwarding to the relevant endpoint device. The egress manager may identify an egress queue associated with the destination egress port based on the SPID included in the header. Thus, based on the SPID, the egress manager may store the data packet with the one or more tags in the egress queue associated with the destination egress port. The data packet may then be forwarded from the egress queue to the relevant endpoint device via the destination egress port. Thus, at the egress switch, the inclusion of SPIDs and encapsulation values in the headers of the data packets received from ingress switches ensures smooth and quick processing of data packets. Consequently, the congestion in the network fabric is further reduced.

The data packet transfer between any leaf switches of the network fabric may be processed in the similar manner as described above. Each egress manager may be configured to determine whether any egress port is de-configured, generate a delete indication configured to signal the de-configuration of an egress port, and broadcast the delete indication. In yet more embodiments, the delete indication is broadcasted with the Ethernet AD per ES route. Each ingress manager may thus be configured to receive the delete indication and delete, in response to the delete indication, a VO queue created for the egress port indicated by the delete indication.

Conventionally, ingress switches forward data packets without explicit awareness of the availability of egress ports. Furthermore, the determination of appropriate egress port and necessary tagging operations is performed at the egress switch. Both these factors contribute to significant congestion in the network fabric. Consequently, the network fabric's efficiency and the performance of applications running on GPUs connected via the network fabric suffer. In the present disclosure, the data packet is stored at the ingress switch until the egress switch is available for transmission. Further, the stored data packet includes all the necessary information for a smooth and quick egress through the egress switch. Thus, the congestion in the network fabric of the present disclosure is significantly less than that in conventional network fabrics. Consequently, the network fabric's efficiency is greater than that of conventional network fabrics. Further, the performance of applications running on GPUs connected via the network fabric of the present disclosure is greater than that of applications running on GPUs connected via the conventional network fabrics.

Aspects of the present disclosure may be embodied as an apparatus, system, method, or computer program product. Accordingly, aspects of the present disclosure may take the form of an entirely hardware embodiment, an entirely software embodiment (including firmware, resident software, micro-code, or the like) or an embodiment combining software and hardware aspects that may all generally be referred to herein as a "function," "module," "apparatus," or "system." Furthermore, aspects of the present disclosure may take the form of a computer program product embodied in one or more non-transitory computer-readable storage media storing computer-readable and/or executable program code. Many of the functional units described in this specification have been labeled as functions, in order to emphasize their implementation independence more particularly. For example, a function may be implemented as a hardware circuit comprising custom VLSI circuits or gate arrays, off-the-shelf semiconductors such as logic chips, transistors, or other discrete components. A function may also be implemented in programmable hardware devices such as via field programmable gate arrays, programmable array logic, programmable logic devices, or the like.

Functions may also be implemented at least partially in software for execution by various types of processors. An identified function of executable code may, for instance, comprise one or more physical or logical blocks of computer instructions that may, for instance, be organized as an object, procedure, or function. Nevertheless, the executables of an identified function need not be physically located together but may comprise disparate instructions stored in different locations which, when joined logically together, comprise the function and achieve the stated purpose for the function.

Indeed, a function of executable code may include a single instruction, or many instructions, and may even be distributed over several different code segments, among different programs, across several storage devices, or the like. Where a function or portions of a function are implemented in software, the software portions may be stored on one or more computer-readable and/or executable storage media. Any combination of one or more computer-readable storage media may be utilized. A computer-readable storage medium may include, for example, but not limited to, an electronic, magnetic, optical, electromagnetic, infrared, or semiconductor system, apparatus, or device, or any suitable combination of the foregoing, but would not include propagating signals. In the context of this document, a computer-readable and/or executable storage medium may be any tangible and/or non-transitory medium that may contain or store a program for use by or in connection with an instruction execution system, apparatus, processor, or device.

Computer program code for carrying out operations for aspects of the present disclosure may be written in any combination of one or more programming languages, including an object-oriented programming language such as Python, Java, Smalltalk, C++, C#, Objective C, or the like, conventional procedural programming languages, such as the "C" programming language, scripting programming languages, and/or other similar programming languages. The program code may execute partly or entirely on one or more of a user's computer and/or on a remote computer or server over a data network or the like.

A component, as used herein, comprises a tangible, physical, non-transitory device. For example, a component may be implemented as a hardware logic circuit comprising custom VLSI circuits, gate arrays, or other integrated circuits; off-the-shelf semiconductors such as logic chips, transistors, or other discrete devices; and/or other mechanical or electrical devices. A component may also be implemented in programmable hardware devices such as field programmable gate arrays, programmable array logic, programmable logic devices, or the like. A component may comprise one or more silicon integrated circuit devices (e.g., chips, die, die planes, packages) or other discrete electrical devices, in electrical communication with one or more other components through electrical lines of a printed circuit board ("PCB") or the like. Each of the functions and/or modules described herein, in certain embodiments, may alternatively be embodied by or implemented as a component.

A circuit, as used herein, comprises a set of one or more electrical and/or electronic components providing one or more pathways for electrical current. In certain embodiments, a circuit may include a return pathway for electrical current, so that the circuit is a closed loop. In another embodiment, however, a set of components that does not include a return pathway for electrical current may be referred to as a circuit (e.g., an open loop). For example, an integrated circuit may be referred to as a circuit regardless of whether the integrated circuit is coupled to ground (as a return pathway for electrical current) or not. In various embodiments, a circuit may include a portion of an integrated circuit, an integrated circuit, a set of integrated circuits, a set of non-integrated electrical and/or electrical components with or without integrated circuit devices, or the like. In one embodiment, a circuit may include custom VLSI circuits, gate arrays, logic circuits, or other integrated circuits; off-the-shelf semiconductors such as logic chips, transistors, or other discrete devices; and/or other mechanical or electrical devices. A circuit may also be implemented as a synthesized circuit in a programmable hardware device such as a field programmable gate array, programmable array logic, programmable logic device, or the like (e.g., as firmware, a netlist, or the like). A circuit may comprise one or more silicon integrated circuit devices (e.g., chips, die, die planes, packages) or other discrete electrical devices, in electrical communication with one or more other components through electrical lines of a printed circuit board, or the like. Each of the functions and/or modules described herein, in certain embodiments, may be embodied by or implemented as a circuit.

Reference throughout this specification to "one embodiment," "an embodiment," or similar language means that a particular feature, structure, or characteristic described in connection with the embodiment is included in at least one embodiment of the present disclosure. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Further, as used herein, reference to reading, writing, storing, buffering, and/or transferring data can include the entirety of the data, a portion of the data, a set of the data, and/or a subset of the data. Likewise, reference to reading, writing, storing, buffering, and/or transferring non-host data can include the entirety of the non-host data, a portion of the non-host data, a set of the non-host data, and/or a subset of the non-host data.

Lastly, the terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C." An exception to this definition will occur only when a combination of elements, functions, steps, or acts are in some way inherently mutually exclusive.

Aspects of the present disclosure are described below with reference to schematic flowchart diagrams and/ or schematic block diagrams of methods, apparatuses, systems, and computer program products according to embodiments of the disclosure. It will be understood that each block of the schematic flowchart diagrams and/or schematic block diagrams, and combinations of blocks in the schematic flowchart diagrams and/or schematic block diagrams, can be implemented by computer program instructions. These computer program instructions may be provided to a processor of a computer or other programmable data processing apparatus to produce a machine, such that the instructions, which execute via the processor or other programmable data processing apparatus, create means for implementing the functions and/or acts specified in the schematic flowchart diagrams and/or schematic block diagrams block or blocks.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated figures. Although various arrow types and line types may be employed in the flowchart and/or block diagrams, they are understood not to limit the scope of the corresponding embodiments. For instance, an arrow may indicate a waiting or monitoring period of unspecified duration between enumerated steps of the depicted embodiment.

In the following detailed description, reference is made to the accompanying drawings, which form a part thereof. The foregoing summary is illustrative only and is not intended to be in any way limiting. In addition to the illustrative aspects, embodiments, and features described above, further aspects, embodiments, and features will become apparent by reference to the drawings and the following detailed description. The description of elements in each figure may refer to elements of proceeding figures. Like numbers may refer to like elements in the figures, including alternate embodiments of like elements.

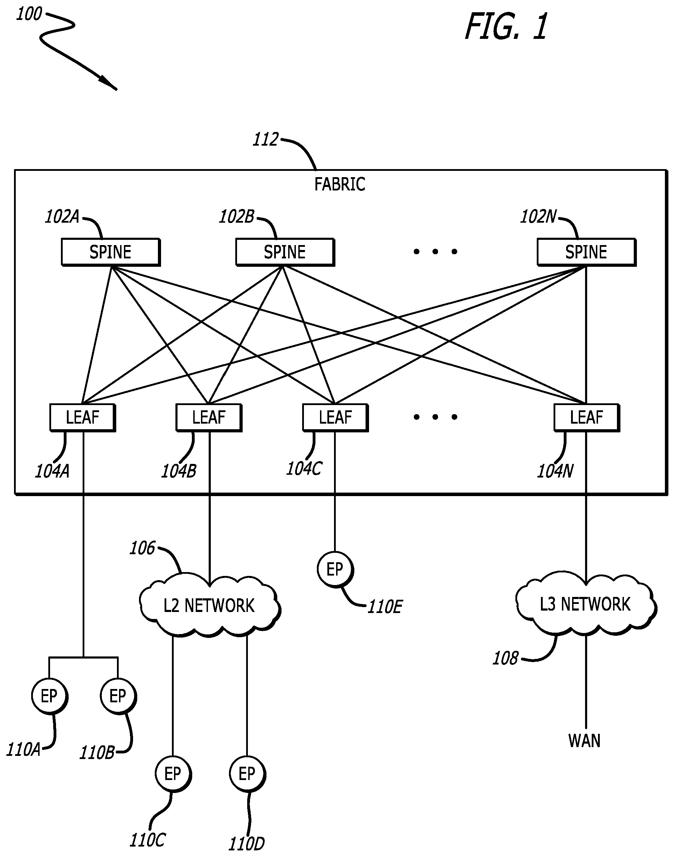

Referring to FIG. 1, a schematic block diagram of an example architecture 100 for a network fabric 112 in accordance with various embodiments of the disclosure is shown. The network fabric 112 can include spine switches 102A, 102B, ... 102N (collectively "102") connected to leaf switches 104A, 104B, 104C, ... 104N (collectively "104") in the network fabric 112. As those skilled in the art will recognize, networking fabric can refer to a high-speed, high-bandwidth interconnect system that enables multiple devices to communicate with each other efficiently and reliably. It is a network topology that is designed to provide a flexible and scalable infrastructure for data centers, cloud environments, and other network elements.

Various embodiments described herein can include a leaf-spine architecture comprising a plurality of spine switches and leaf switches. Spine switches 102 can be L3 switches in the fabric 112. An L3 switch, or Layer 3 switch, is a networking device that operates at a network layer (Layer 3) of the Open Systems Interconnection ("OSI") model. However, in some cases, the spine switches 102 can also, or otherwise, perform L2 (e.g., Layer 2 of the OSI model) functionalities. Further, the spine switches 102 can support various capabilities, such as, but not limited to, 400 or 100 Gbps Ethernet speeds. To this end, the spine switches 102 can be configured with one or more 400 Gigabit Ethernet ports. In certain embodiments, each port can also be split to support other speeds. For example, a 400 Gigabit Ethernet port can be split into four 100 Gigabit Ethernet ports, although a variety of other combinations are available.

In many embodiments, one or more of the spine switches 102 can be configured to host a proxy function that performs a lookup of the endpoint address identifier to locator mapping in a mapping database on behalf of the leaf switches 104 that do not have such mapping. The proxy function can do this by parsing through the packet to the encapsulated tenant packet to get to the destination locator address of the tenant. The spine switches 102 can then perform a lookup of their local mapping database to determine the correct locator address of the packet and forward the packet to the locator address without changing certain fields in the header of the packet.

In various embodiments, when a packet is received at a spine switch 102*ᵢ*, where the subscript "i" indicates that this operation may occur at any spine switch 102A to 102N, the spine switch 102*ᵢ* can first check if the destination locator address is a proxy address. If so, the spine switch 102*ᵢ* can perform the proxy function as previously mentioned. If not, the spine switch 102*ᵢ* can look up the locator in its forwarding table and forward the packet accordingly.

In a number of embodiments, one or more spine switches 102 can connect to one or more leaf switches 104 within the fabric 112. The leaf switches 104 can include access ports (or non-fabric ports) and fabric ports. Fabric ports can provide uplinks to the spine switches 102, while access ports can provide connectivity for devices, hosts, endpoints, virtual machines ("VMs"), or external networks to the fabric 112.

In more embodiments, the leaf switches 104 can reside at the edge of the fabric 112, and can thus represent the physical network edge. In some cases, the leaf switches 104 can be top-of-rack ("ToR") switches configured according to a ToR architecture. In other cases, the leaf switches 104 can be aggregation switches in any particular topology, such as end-of-row ("EoR") or middle-of-row ("MoR") topologies. The leaf switches 104 can also represent aggregation switches, for example.

In additional embodiments, the leaf switches 104 can be responsible for routing and/or bridging various packets and applying network policies. In some cases, a leaf switch can perform one or more additional functions, such as implementing a mapping cache, sending packets to the proxy function when there is a miss in the cache, encapsulating packets, enforcing ingress or egress policies, etc. Moreover, the leaf switches 104 can contain virtual switching functionalities, such as a virtual tunnel endpoint ("VTEP") function. Further, the leaf switches 104 can connect the fabric 112 to an overlay network.

In further embodiments, network connectivity in the fabric 112 can flow through the leaf switches 104. Here, the leaf switches 104 can provide servers, resources, endpoints, external networks, or VMs access to the fabric 112, and can connect the leaf switches 104 to each other. In some cases, the leaf switches 104 can connect endpoint groups to the fabric 112 and/or any external networks. Each endpoint group can connect to the fabric 112 via one of the leaf switches 104, for example.

Endpoints 110A - 100E (collectively "110", shown as "EP") can connect to the fabric 112 via the leaf switches 104. For example, the endpoints 110A and 110B can connect directly to the leaf switch 104A, which can connect the endpoints 110A and 110B to the fabric 112 and/or any other one of the leaf switches 104. Similarly, the endpoint 110E can connect directly to the leaf switch 104C, which can connect the endpoint 110E to the fabric 112 and/or any other of the leaf switches 104. On the other hand, the endpoints 110C and 110D can connect to the leaf switch 104B via L2 network 106. Similarly, the wide area network can connect to the leaf switch 104N via L3 network 108.

In numerous additional embodiments, the endpoints 110 can include any communication devices, such as computers, servers, switches, routers, graphics processing units ("GPUs"), etc. In some cases, the endpoints 110 can include a server, hypervisor, or switch configured with a VTEP functionality which connects an overlay network with the fabric 112. The overlay network can host physical devices, such as servers, applications, endpoint groups, virtual segments, virtual workloads, etc. In addition, the endpoints 110 can host virtual workload(s), clusters, and applications or services, which can connect with the fabric 112 or any other device or network, including an external network. For example, one or more of the endpoints 110 can host, or connect to, a cluster of load balancers or an endpoint group of various applications.

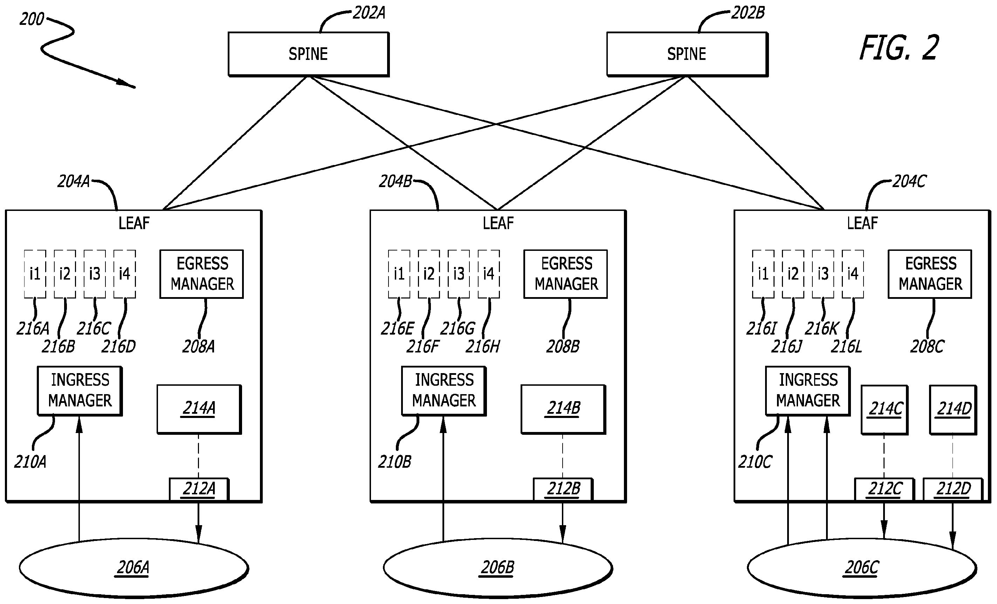

Although a specific embodiment for an architecture 100 is described above with respect to FIG. 1, any of a variety of systems and/or processes may be utilized in accordance with embodiments of the disclosure. For example, the architecture 100 could comprise any variety of endpoints, spine switches, and/or leaf switches. The elements depicted in FIG. 1 may also be interchangeable with other elements of FIGS. 2 - 8 as required to realize a particularly desired embodiment.

Referring to FIG. 2, a schematic block diagram of an example computing system 200 that employs fabric congestion management in accordance with various embodiments of the disclosure is shown. The computing system 200 may be used in various applications, such as, data centers, systems providing cloud services, high-performance computing and distributed computing, or the like.

The embodiments depicted in FIG. 2 may show the computing system 200 including first and second spine switches 202A and 202B (collectively "spine switches 202") coupled to first through third leaf switches 204A - 204C (collectively "leaf switches 204"). The computing system 200 may further include first through third endpoint devices 206A - 206C (collectively "endpoint devices 206"). The first endpoint device 206A is coupled to the first leaf switch 204A, the second endpoint device 206B is coupled to the second leaf switch 204B, and the third endpoint device 206C is coupled to the third leaf switch 204C.

As those skilled in the art will recognize, the spine switches 202 and the leaf switches 204 can form a high-speed, high-bandwidth interconnect system that enables multiple devices (e.g., the endpoint devices 206) to communicate with each other efficiently and reliably. For example, the spine switches 202 and the leaf switches 204 may form a network fabric based on Remote Direct Memory Access ("RDMA") based protocol, for example, an RDMA over Converged Ethernet version 2 ("RoCEv2") protocol. Further, the network fabric may utilize the RDMA-based protocol in a reliable connection ("RC") mode.

The spine switches 202 are network devices that interconnect and facilitate communication between the leaf switches 204. The spine switches 202 may be configured to route traffic between the different leaf switches 204. In some examples, the spine switches 202 can be L3 switches. Further, the spine switches 202 can support various capabilities, such as, but not limited to, 400 or 100 Gbps Ethernet speeds. For example, the spine switches 202 can be configured with one or more 400 Gigabit Ethernet ports to enable 400 Gbps Ethernet speeds. In many embodiments, each port can also be split to support other speeds. For example, a 400 Gigabit Ethernet port can be split into four 100 Gigabit Ethernet ports, although a variety of other combinations are available.

The leaf switches 204 are network devices that represent physical network edges. In some examples, the leaf switches 204 can be ToR switches configured according to a ToR architecture. In other examples, the leaf switches 204 can be aggregation switches in any particular topology, such as EoR or MoR topologies. The leaf switches 204 may be configured to serve as connection points for the endpoint devices 206. Further, the leaf switches 204 may be configured to aggregate traffic from the endpoint devices 206 and forward it to the spine switches 202. The leaf switches 204 can function as ingress and egress switches. An ingress switch is an entry point of a data packet in the network fabric, whereas an egress switch is an exit point of the data packet from the network fabric. The leaf switches 204 may not be directly coupled to each other but can be coupled indirectly through the spine switches 202. In some examples, a number of uplinks from a leaf switch is equal to a number of spine switches, and a number of downlinks from a spine switch is equal to the number of leaf switches.

The endpoint devices 206 can include any communication devices, such as computers, servers, switches, routers, GPUs, etc. In some cases, the endpoint devices 206 can include a server, hypervisor, or switch configured with a VTEP functionality which connects an overlay network with the network fabric (e.g., the spine switches 202 and the leaf switches 204). The overlay network can host physical devices, such as servers, applications, endpoint groups, virtual segments, virtual workloads, etc. In addition, the endpoint devices 206 can host virtual workload(s), clusters, and applications or services, which can connect with the network fabric or any other device or network, including an external network. For example, one or more of the endpoint devices 206 can host, or connect to, a cluster of load balancers or an endpoint group of various applications. In a number of embodiments, the endpoint devices 206 are directly coupled to the network fabric using a physical link or a bridged network. In other words, the endpoint devices 206 are coupled to the network fabric without any Internet protocol ("IP") network in between.

Endpoint devices (such as the endpoint devices 206) communicate with each other by way of the network fabric (e.g., the spine and leaf switches 202 and 204). The efficacy of various applications running on the endpoint devices relies heavily on the unimpeded flow of traffic through the network fabric. Thus, it is crucial for the network fabric to efficiently handle large data transfers, known as elephant flows, without causing congestion. In this network architecture, each data transfer involves an ingress switch, which receives data from the initiating endpoint device, and an egress switch, responsible for directing the data packets to their intended destinations. Traditionally, the ingress switch determines the destination (e.g., the egress switch) of the data packets and forwards the data packets to the egress switch via a spine switch. Upon receipt, the egress switch identifies outgoing ports. Moreover, the egress switch is tasked with identifying the specific tagging operations necessary for the data packets and executing these operations on the data packets to render them suitable for forwarding to the relevant endpoint devices.

Conventionally, the ingress switch forwards the data packets without explicit knowledge of egress port availability. When egress ports are unable to handle incoming packets, they accumulate within the network fabric, residing at spine switches or egress switches. This accumulation results in substantial congestion, as numerous packets remain stuck in transit. Moreover, the process of determining the correct egress port and applying necessary tagging operations at the egress switch adds to processing delays, worsening congestion. Consequently, the efficiency of the network fabric and the performance of applications suffer, impacting endpoint devices connected to the network.

To alleviate the aforementioned issues, disaggregated scheduled fabric ("DSF") with an Ethernet Virtual Private Network ("EVPN") control plane is implemented for fabric congestion management in the present disclosure. DSF refers to a networking architecture where the entire network (consisting of leaf and spine switches) acts as a single logical switch. In such cases, the leaf switches can be considered as disaggregated line cards of the logical switch and the data traffic from the ingress leaf switch (ingress line card) to the egress leaf switch (egress line card) is scheduled to avoid congestion in the fabric. The control plane functions can be distributed across multiple network devices based on EVPN standards with additional enhancements described here allowing for greater flexibility and scalability in network design. EVPN is a network technology designed to provide a scalable, multi-tenant, and interoperable solution. Various features of EVPN include media access control ("MAC") and IP mobility, Layer 2 and Layer 3 virtual private network ("VPN") services, border gateway protocol ("BGP")-based control plane, flexible multi-homing, integrated routing and bridging, MAC learning and distribution in control plane, or the like. In the present disclosure, various features of the EVPN are combined with the DSF to improve congestion management in the network fabric.

To enable fabric congestion management, each of the leaf switches 204 may include an egress manager, an ingress manager, and one or more virtual output ("VO") queues. For example, the first through third leaf switches 204A - 204C may include first through third egress managers 208A - 208C (collectively "egress managers 208"), respectively, and first through third ingress managers 210A - 210C (collectively "ingress managers 210"), respectively.

Each of the leaf switches 204 may further include various egress ports (e.g., via which data packets are forwarded outside the network fabric and to relevant endpoint devices). As illustrated in FIG. 2, the first leaf switch 204A may include a first egress port 212A, the second leaf switch 204B may include a second egress port 212B, and the third leaf switch 204C may include third and fourth egress ports 212C and 212D. One or more egress ports may be logically grouped to form an Ethernet segment. For an Ethernet segment to be active, at least one egress port needs to be active (e.g., can send traffic). Each egress port may be associated with an egress queue that is configured to store data packets prior to egress via the egress port. As illustrated in FIG. 2, the first leaf switch 204A may include a first egress queue 214A for the first egress port 212A, the second leaf switch 204B may include a second egress queue 214B for the second egress port 212B, and the third leaf switch 204C may include third and fourth egress queues 214C and 214D for the third and fourth egress ports 212C and 212D, respectively. In further additional embodiments, the first through fourth egress queues 214A - 214D are smaller in size than the VO queues.

In a variety of embodiments, each of the first through fourth egress ports 212A - 212D is a physical port, and each of the first through fourth egress queues 214A - 214D is a physical port queue. In some embodiments, each of the first through fourth egress ports 212A - 212D is a logical port, and each of the first through fourth egress queues 214A - 214D is a logical port queue. In more embodiments, some of the first through fourth egress ports 212A - 212D are physical ports, whereas the remaining egress ports are logical ports. Further, some of the first through fourth egress queues 214A - 214D are physical port queues, whereas the remaining egress queues are logical port queues.

The number of VO queues in each leaf switch is equal to the number of egress ports in the network fabric. Thus, for the computing system 200 illustrated in FIG. 2, each leaf switch may include four VO queues for the first though fourth egress ports 212A - 212D. For example, the first leaf switch 204A may include first through fourth VO queues 216A - 216D for the first though fourth egress ports 212A - 212D, respectively. The first through fourth VO queues 216A - 216D may be configured to store data packets for the first through fourth egress ports 212A - 212D, respectively, that are received at the ingress switch (e.g., the first leaf switch 204A). Thus, the VO queues are queues for egress ports of egress switches but they are located on the ingress switches. Similarly, the second leaf switch 204B may include fifth through eighth VO queues 216E - 216H for the first though fourth egress ports 212A - 212D, respectively, and the third leaf switch 204C may include ninth through twelfth VO queues 216I - 216L for the first though fourth egress ports 212A - 212D, respectively. The first through twelfth VO queues 216A - 216L are collectively referred to as the "VO queues 216". The egress managers 208, the ingress managers 210, and the VO queues 216 enable congestion management within the network fabric.

The egress managers 208 may include suitable circuitry that may be configured to perform one or more operations. For example, the egress managers 208 may be configured to facilitate the creation of the VO queues 216 in the leaf switches 204. To facilitate the creation of the VO queues 216, each egress manager may execute various operations. For example, an egress manager 208*ᵢ* (where the subscript "i" indicates that this can be any of the first through third egress managers 208A - 208C) may be configured to identify one or more egress ports present (e.g., configured) in the corresponding leaf switch. The configuration of a port in a network device refers to the settings and parameters that determine how that specific port operates within the device and interacts with other devices on the network fabric. Each egress port has a unique system port identifier ("SPID"). In additional embodiments, the SPID is a 32-bit integer. Further, the egress manager 208*ᵢ* may be configured to determine an operational state of each egress port and generate a state indicator indicative of the determined operational state. The operational state may be active or inactive. In further embodiments, the state indicator is an 8-bit integer. The egress manager 208*ᵢ* may be configured to determine one or more tagging operations to be performed for transmission over each egress port and generate an encapsulation value indicative of the determined one or more tagging operations. The one or more tagging operations may correspond to virtual local access network ("VLAN") acrobats (e.g., VLAN-tag translation, double-tag or 802.1Q Tunneling ("QinQ") imposition, or the like). In still more embodiments, the encapsulation value is a 32-bit integer.

Thus, at the first leaf switch 204A, a first SPID, a first state indicator, and a first encapsulation value are generated for the first egress port 212A. Similarly, at the second leaf switch 204B, a second SPID, a second state indicator, and a second encapsulation value are generated for the second egress port 212B. Further, at the third leaf switch 204C, third and fourth SPIDs, third and fourth state indicators, and third and fourth encapsulation values are generated for the third and fourth egress ports 212C and 212D, respectively. The egress manager of each of the first through third leaf switches 204A - 204C may be configured to broadcast the corresponding SPIDs, state indicators, and encapsulation values. The broadcast (e.g., advertisement) of the SPIDs, state indicators, and encapsulation values may enable the detection of the egress ports by other leaf switches within the network fabric.

In some examples, the egress manager of each of the first through third leaf switches 204A - 204C may broadcast the corresponding SPIDs, state indicators, and encapsulation values with an Ethernet Auto-Discovery (AD) per Ethernet Segment (ES) route. The Ethernet AD per ES route is a route type-1 EVPN route. The broadcast may be executed, for example, in two ways. In still further embodiments, each egress manager may broadcast the corresponding SPIDs, state indicators, and encapsulation values with an Ethernet AD per ES route by way of an EVPN BGP extended community ("EC"). Tunnel type EC per section 4.5 of Request for Comments ("RFC") 5512 includes a 4-byte (e.g., 32-bit) reserve field. To broadcast a 32-bit SPID, the tunnel type can be set to "Fabric", and the 4 bytes of the reserve field can be populated with the 32-bit SPID. Another EC can be similarly used for the encapsulation value. In some examples, a single byte of the reserve field may additionally be used for broadcasting the state indicator. In still additional embodiments, each egress manager may broadcast the corresponding SPIDs, state indicators, and encapsulation values along with an Ethernet AD per ES route by way of an EVPN BGP attribute (e.g., tunnel encapsulation attribute per RFC 5512). A new tunnel type and corresponding sub-type, length, value ("sub-TLV") can be defined. The sub-TLV allows for multiple fields such as the SPIDs, encapsulation values, and state indicators to be broadcasted.

The ingress managers 210 may include suitable circuitry that may be configured to perform one or more operations. For example, the ingress managers 210 may be configured to create the VO queues 216 in the leaf switches 204. An ingress manager 210*ᵢ* (where the subscript "i" indicates that this can be any of the first through third ingress managers 210A - 210C) may be configured to receive a set of SPIDs, a set of state indicators, and a set of encapsulation values from one or more network devices (e.g., from egress managers of one or more leaf switches). For example, the first ingress manager 210A may receive the first SPID, the first state indicator, and the first encapsulation value from the first egress manager 208A, the second SPID, the second state indicator, and the second encapsulation value from the second egress manager 208B, and the third and fourth SPIDs, the third and fourth state indicators, and the third and fourth encapsulation values from the third egress manager 208C. In some examples, the set of SPIDs, the set of state indicators, and the set of encapsulation values are received with the Ethernet AD per ES route. The SPIDs, the state indicators, the encapsulation values, and the Ethernet AD per ES route may be received via the EVPN BGP ECs or the EVPN BGP attributes. A SPID may be configured to indicate an egress port that is present at an egress switch, a state indicator may be configured to signal an operational state of the egress port, and an encapsulation value may be configured to signal one or more tagging operations to be performed for egress port transmission.

Based on the received SPIDs, the first ingress manager 210A may be configured to detect one or more egress ports associated with each leaf switch. In response to the detection of the one or more egress ports, the first ingress manager 210A may be configured to create a VO queue for each egress port. For example, based on the first and second SPIDs, the first ingress manager 210A may be configured to detect the first and second egress ports 212A and 212B associated with the first and second leaf switches 204A and 204B, respectively. Similarly, based on the third and fourth SPIDs, the first ingress manager 210A may be configured to detect the third and fourth egress ports 212C and 212D associated with the third leaf switch 204C, respectively. In response to the detection of the first through fourth egress ports 212A - 212D, the first ingress manager 210A may be configured to create the first through fourth VO queues 216A - 216D for the first through fourth egress ports 212A - 212D, respectively.

Based on the received state indicators, the first ingress manager 210A may be configured to detect operational states of the detected one or more egress ports. Based on the detected operational states, the corresponding VO queues may be enabled or disabled for data packet storing. For example, based on the first through fourth state indicators, the first ingress manager 210A may be configured to detect the operational states of the first through fourth egress ports 212A - 212D, respectively. For the sake of ongoing discussion, it is assumed that the first through fourth egress ports 212A - 212D are active (e.g., can send traffic), and hence, the first through fourth VO queues 216A - 216D are enabled for data packet storing.

The second ingress manager 210B may operate similarly to the first ingress manager 210A to create the fifth through eighth VO queues 216E - 216H. Further, the third ingress manager 210C may operate similarly to the first ingress manager 210A to create the ninth through twelfth VO queues 216I - 216L. The creation of the VO queues 216 ensures that the network fabric is better equipped to handle congestion.

In operation, one endpoint device may be communicating with another endpoint device. For example, the first endpoint device 206A may be communicating with the third endpoint device 206C. For the communication, the first endpoint device 206A may be configured to generate one or more data packets and transmit the one or more data packets to the first leaf switch 204A. Thus, the first ingress manager 210A of the first leaf switch 204A may be configured to receive a first data packet from the first endpoint device 206A. The first ingress manager 210A may be configured to determine an egress port for the first data packet. In some more embodiments, the first data packet may include one or more fields that may be indicative of the destination endpoint device, the destination egress switch, the destination egress port, or a combination thereof. In certain embodiments, the destination egress port for the first data packet may be determined by way of the VTEP address. For the sake of ongoing discussion, it is assumed that the third egress port 212C is the destination egress port for the first data packet.

The first ingress manager 210A may be configured to identify a VO queue (e.g., the third VO queue 216C) created for the third egress port 212C. In response to receiving the first data packet and identifying the corresponding egress port, the first ingress manager 210A may be configured to determine the operational state of the third egress port 212C. In yet more embodiments, the first ingress manager 210A may maintain a first look-up table including a mapping between the VO queue, the egress port, and the operational state of the egress port, and based on the determined egress port, the first ingress manager 210A may access the first look-up table to identify the corresponding VO queue and the operational state. As the third egress port 212C is operational (e.g., active), the first ingress manager 210A may be configured to store the first data packet in the third VO queue 216C. Thus, the first data packet is stored in the third VO queue 216C in response to determining that the third egress port 212C is operational.

In response to receiving the first data packet and prior to storing the first data packet in the third VO queue 216C, the first ingress manager 210A may be configured to add the third SPID associated with the third egress port 212C to a header of the first data packet. Additionally or alternatively, in response to receiving the first data packet and prior to storing the first data packet in the third VO queue 216C, the first ingress manager 210A may be configured to add the third encapsulation value associated with the third egress port 212C to the header of the first data packet. The stored first data packet may thus include all the necessary information for a smooth and quick egress through the egress switch (e.g., the third leaf switch 204C). The first data packet is stored at the ingress switch (e.g., the first leaf switch 204A) until the egress switch (e.g., the third leaf switch 204C) is available for transmission. The storing of the first data packet at the ingress switch until the egress switch is available for transmission ensures that the congestion in the network fabric (e.g., at spine switches and egress switches) is reduced.

Each egress manager may be configured to determine the availability of the associated egress switch. For example, the third egress manager 208C may be configured to determine the availability of the third leaf switch 204C. The availability determination may be executed in a periodic manner or in response to one or more triggers (e.g., reception of data packets at ingress switches). When the third leaf switch 204C is available for transmission, the third egress manager 208C may be configured to generate and transmit a token to the first leaf switch 204A (e.g., the first ingress manager 210A). The token may be configured to indicate the availability of the third leaf switch 204C for data packet transmission. In still yet more embodiments, the token can correspond to an integer number of bytes for transmission (e.g., a number of bytes of data that the egress switch can process). The first ingress manager 210A may thus be configured to receive the token for transmission of the stored first data packet. Based on the received token, the first ingress manager 210A may be configured to forward the first data packet stored in the third VO queue 216C to the third leaf switch 204C (e.g., the third egress manager 208C). In many further embodiments, the token and the first data packet are transmitted via a spine switch. The spine switch for the token transmission may be the same or different from the spine switch for the first data packet transmission.

Thus, in response to the token, the third egress manager 208C may be configured to receive the first data packet. The header of the first data packet comprises the third SPID and the third encapsulation value. The third egress manager 208C may be configured to obtain the third SPID and the third encapsulation value from the header of the first data packet. Based on the third encapsulation value, the third egress manager 208C may be configured to add one or more tags in the first data packet. The addition of the one or more tags renders the first data packet suitable for forwarding to the relevant endpoint device (e.g., the third endpoint device 206C). The third egress manager 208C may be configured to identify an egress queue (e.g., the third egress queue 214C) associated with the third egress port 212C based on the third SPID. In many additional embodiments, the third egress manager 208C may maintain a second look-up table including a mapping between the encapsulation values and tagging operations, and a third look-up table including a mapping between the SPIDs, the egress ports, and the egress queues. Based on the third encapsulation value, the third egress manager 208C may access the second look-up table to identify the corresponding tagging operations. Similarly, based on the third SPID, the third egress manager 208C may access the third look-up table to identify the third egress queue 214C and the third egress port 212C.

Thus, based on the third SPID, the third egress manager 208C may be configured to store the first data packet with the one or more tags in the third egress queue 214C. The first data packet may then be forwarded from the third egress queue 214C to the third endpoint device 206C via the third egress port 212C. Thus, at the egress switch, the inclusion of SPIDs and encapsulation values in the headers of the data packets received from ingress switches ensures smooth and quick processing of data packets. Consequently, the congestion in the network fabric is further reduced. Other data packets transmitted from the first leaf switch 204A to the third egress port 212C may be processed in a similar manner as described above. Further, the data packet transfer between any leaf switches of the network fabric may be processed in the similar manner as described above.

Each egress manager may be configured to determine whether any egress port is de-configured. The de-configuration of an egress port may correspond to the removal of the configuration settings that govern how data packets are sent out of the egress on a network device. Further, each egress manager may be configured to generate a delete indication configured to signal the de-configuration of an egress port and broadcast the delete indication. For example, the third egress manager 208C may be configured to determine whether any of the third and fourth egress ports 212C and 212D are de-configured. If the fourth egress port 212D is de-configured, the third egress manager 208C may be configured to generate a delete indication configured to signal de-configuration of the fourth egress port 212D. The third egress manager 208C may be configured to broadcast the delete indication. In still yet further embodiments, the delete indication is broadcasted with the Ethernet AD per ES route. Each ingress manager may thus be configured to receive the delete indication. For example, the first ingress manager 210A may be configured to receive the delete indication and delete, in response to the delete indication, the fourth VO queue 216D created for the fourth egress port 212D. The second and third ingress managers 210B and 210C may be similarly configured to delete the eighth and twelfth VO queues 216H and 216L created for the fourth egress port 212D, respectively, based on the delete indication.

Conventionally, ingress switches forward data packets without explicit awareness of the availability of egress ports. Furthermore, the determination of appropriate egress port and necessary tagging operations is performed at the egress switch. Both these factors contribute to significant congestion in the network fabric. Consequently, the network fabric's efficiency and the performance of applications running on GPUs connected via the network fabric suffer. In the present disclosure, the data packet is stored at the ingress switch until the egress switch is available for transmission. Further, the stored data packet includes all the necessary information for a smooth and quick egress through the egress switch. Thus, the congestion in the network fabric of the present disclosure is significantly less than that in conventional network fabrics. Consequently, the network fabric's efficiency is greater than that of conventional network fabrics. Further, the performance of applications running on GPUs connected via the network fabric of the present disclosure is greater than that of applications running on GPUs connected via the conventional network fabrics.

In still yet additional embodiments, if an egress port is non-operational (e.g., inactive), an ingress manager may be configured to drop the associated data packet, as the VO queue is disabled for packet storing. In several embodiments, one or more egress ports may be part of a single equal cost multi-path ("ECMP") group. In such scenarios, if an egress port is non-operational (e.g., inactive), an ingress manager may be configured to store the associated data packet in a VO queue created for another egress port of the same ECMP group.

In several more embodiments, policy-based forwarding can be performed at the ingress switches and hence, source group tag ("SGT") and destination group tag ("DGT") fields may not be carried in the header of a data packet if re-routing is not needed. In numerous embodiments, if instead of destination, the data packet needs to be sent to an intermediate node, SGT & DGT fields are carried in the header. SGT and DGT fields are needed in the header if full ingress lookup is to be avoided at the intermediate node. In numerous additional embodiments, at the ingress switch, ECMP and link aggregation group ("LAG") are performed prior to storing the data packets in the VO queues.

The computing system 200 depicted in FIG. 2 is shown as a simplified, conceptual computing system. Those skilled in the art will understand that a computing system 200 can include a large variety of devices (e.g., endpoint devices, leaf switches, and spine switches) and be arranged in a virtually limitless number of combinations based on the desired application and available deployment environment. For example, the computing system 200 may include more than two spine switches, more than three leaf switches, and more than three endpoint devices.

Although a specific embodiment for a computing system that employs fabric congestion management suitable for carrying out the various steps, processes, methods, and operations described herein is discussed with respect to FIG. 2, any of a variety of systems and/or processes may be utilized in accordance with embodiments of the disclosure. For example, the SPIDs, state indicators, and encapsulation values may be communicated with MAC/IP routes. The elements depicted in FIG. 2 may also be interchangeable with other elements of FIGS. 1 and 3 - 8 as required to realize a particularly desired embodiment.

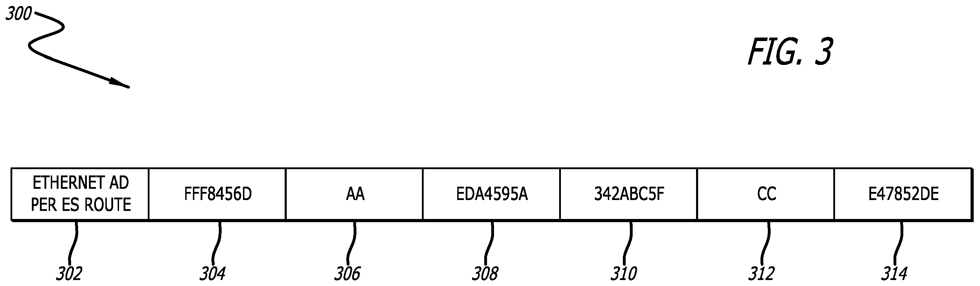

Referring to FIG. 3, a schematic block diagram of an example egress switch broadcast 300 in accordance with various embodiments of the disclosure is shown. A network fabric may include various spine switches coupled to different leaf switches. The spine and leaf switches can form a high-speed, high-bandwidth interconnect system that enables multiple devices to communicate with each other efficiently and reliably. Various endpoint devices communicate with each other by way of the network fabric (e.g., the spine and leaf switches). The efficacy of various applications running on the endpoint devices relies heavily on the smooth flow of traffic within the network fabric. Consequently, a primary requirement for the network fabric is to support elephant flows without congestion.

To meet such a requirement, DSF with EVPN control plane is implemented in the present disclosure. DSF refers to a networking architecture where the entire network (consisting of leaf and spine switches) acts as a single logical switch. In such cases, the leaf switches can be considered as disaggregated line cards of the logical switch and the data traffic from the ingress leaf switch (ingress line card) to the egress leaf switch (egress line card) is scheduled to avoid congestion in the fabric. EVPN is a network technology designed to provide a scalable, multi-tenant, and interoperable solution. Various features of EVPN include MAC and IP mobility, Layer 2 and Layer 3 VPN services, BGP-based control plane, flexible multi-homing, integrated routing and bridging, MAC learning and distribution in the control plane, or the like. In the present disclosure, various features of the EVPN are combined with the DSF to improve congestion management in the network fabric.

To enable fabric congestion management, each leaf switch may include an egress manager, an ingress manager, and one or more VO queues. Further, each leaf switch may include various egress ports (e.g., via which data packets are forwarded outside the network fabric and to relevant endpoint devices). The number of VO queues in each leaf switch is equal to the number of egress ports in the network fabric. Thus, within each leaf switch, the VO queues may be configured to store data packets for all egress ports. The egress managers, the ingress managers, and the VO queues enable congestion management within the network fabric.

Within each leaf switch, a corresponding egress manager may be configured to identify one or more egress ports present (e.g., configured) in the leaf switch. Each egress port has a unique SPID. In many embodiments, the SPID is a 32-bit integer. Further, the egress manager may be configured to determine an operational state of each egress port and generate a state indicator indicative of the determined operational state. The operational state may be active or inactive. In a number of embodiments, the state indicator is an 8-bit integer. The egress manager may be configured to determine one or more tagging operations to be performed for transmission over each egress port and generate an encapsulation value indicative of the determined one or more tagging operations. In a variety of embodiments, the one or more tagging operations correspond to VLAN acrobats (e.g., VLAN-tag translation, double-tag/QinQ imposition, or the like). In some embodiments, the encapsulation value is a 32-bit integer.

Thus, in a leaf switch having two egress ports, two SPIDs, two state indicators, and two encapsulation values are generated for the two egress ports. The egress manager may be configured to broadcast the two SPIDs, two state indicators, and two encapsulation values. In some examples, the egress manager may broadcast the two SPIDs, two state indicators, and two encapsulation values along with an Ethernet AD per ES route. The Ethernet AD per ES route is an EVPN route. The broadcast (e.g., advertisement) of the Ethernet AD per ES route along with the SPIDs, state indicators, and encapsulation values enables the detection of the egress ports by other leaf switches within the network fabric. The egress switch broadcast 300 is such a broadcast for a leaf switch with two egress ports.

As illustrated in FIG. 3, the egress switch broadcast 300 may include a first section 302 corresponding to the Ethernet AD per ES route. The egress switch broadcast 300 may further include second through fourth sections 304 - 308 corresponding to one egress port (e.g., a first egress port) and fifth through seventh sections 310 - 314 corresponding to the other egress port (e.g., a second egress port).

In more embodiments, the second section 304 includes the SPID of the first egress port, the third section 306 includes the operational state of the first egress port, and the fourth section 308 includes the encapsulation value of the first egress port. The second section 304 thus stores "FFF8456D", a 32-bit integer indicating the SPID of the first egress port. The third section 306 stores "AA", an 8-bit integer indicating the operational state of the first egress port. Further, the fourth section 308 stores "EDA4595A", a 32-bit integer indicating the encapsulation value of the first egress port.

In additional embodiments, the fifth section 310 includes the SPID of the second egress port, the sixth section 312 includes the operational state of the second egress port, and the seventh section 314 includes the encapsulation value of the second egress port. The fifth section 310 thus stores "342ABC5F", a 32-bit integer indicating the SPID of the second egress port. The sixth section 312 stores "CC", an 8-bit integer indicating the operational state of the second egress port. Further, the seventh section 314 stores "E47852DE", a 32-bit integer indicating the encapsulation value of the second egress port.

The broadcast (e.g., advertisement) can be executed, for example, in two ways. In further embodiments, each egress manager may broadcast the corresponding SPIDs, state indicators, and encapsulation values along with an Ethernet AD per ES route by way of an EVPN BGP EC. In still more embodiments, each egress manager may broadcast the corresponding SPIDs, state indicators, and encapsulation values along with an Ethernet AD per ES route by way of an EVPN BGP attribute.

Although a specific embodiment for an egress switch broadcast suitable for carrying out the various steps, processes, methods, and operations described herein is discussed with respect to FIG. 3, any of a variety of systems and/or processes may be utilized in accordance with embodiments of the disclosure. For example, a leaf switch may include a single egress port. In such a scenario, the broadcast may include only one SPID, one state indicator, and one encapsulation value along with an Ethernet AD per ES route. The elements depicted in FIG. 3 may also be interchangeable with other elements of FIGS. 1, 2, and 4 - 8 as required to realize a particularly desired embodiment.

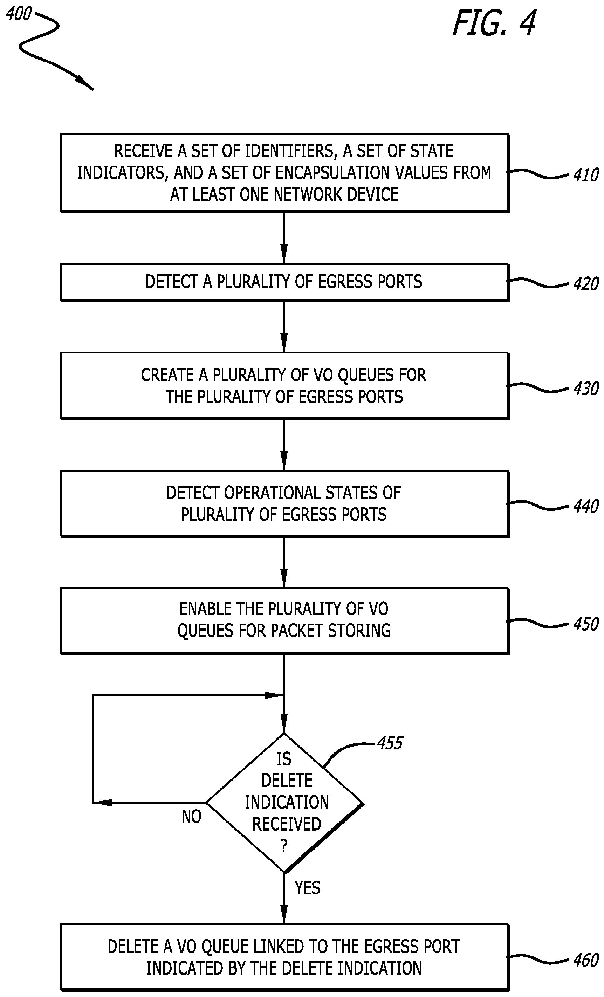

Referring to FIG. 4, a process 400 for implementing VO queues in ingress switches in accordance with various embodiments of the disclosure is shown. In many embodiments, the process 400 may receive a set of identifiers (e.g., SPIDs), a set of state indicators, and a set of encapsulation values from at least one network device (block 410). In some examples, the set of SPIDs, state indicators, and encapsulation values are received with an Ethernet AD per ES route via EVPN BGP ECs or EVPN BGP attributes. A SPID may be configured to indicate an egress port that is present at an egress switch. A state indicator may be configured to signal an operational state of the egress port. An encapsulation value may be configured to signal one or more tagging operations to be performed for egress port transmission.

In a number of embodiments, the process 400 may detect a plurality of egress ports (block 420). The plurality of egress ports may be detected based on the set of SPIDs. In an example, one SPID may be indicative of one egress port, and hence, enables the detection of the corresponding egress port.

In a variety of embodiments, the process 400 may create a plurality of VO queues for the plurality of egress ports (block 430). Thus, at each ingress switch, VO queues are created for storing data packets associated with all egress ports of the network fabric. The creation of VO queues ensures that the network fabric is better equipped to handle congestion.

In some embodiments, the process 400 may detect the operational states of the plurality of egress ports (block 440). The operational states of the plurality of egress ports may be detected based on the set of state indicators. Each egress port may be active or inactive.

In more embodiments, the process 400 may enable the plurality of VO queues for packet storing (block 450). A VO queue is enabled when the corresponding egress port is active. In cases where an egress port is inactive, the corresponding VO queue may be disabled.

In additional embodiments, the process 400 may determine if a delete indication is received (block 455). A delete indication may indicate whether any egress port is de-configured. The de-configuration of an egress port may correspond to the removal of the configuration settings that govern how data packets are sent out of the egress on a network device.

In further embodiments, in response to determining that a delete indication is not received, the process 400 may continue to wait for the receipt of a delete indication (block 455). However, in still more embodiments, in response to determining that a delete indication is received, the process 400 may delete a VO queue linked to the egress port indicated by the delete indication (block 460). In other words, a VO queue linked to a de-configured egress port is deleted. Once a VO queue is deleted, any data packet associated with the deleted VO queue may now be dropped.

Although a specific embodiment for implementing VO queues in ingress switches for carrying out the various steps, processes, methods, and operations described herein is discussed with respect to FIG. 4, any of a variety of systems and/or processes may be utilized in accordance with embodiments of the disclosure. For example, SPIDs, state indicators, and encapsulation values may be received from other leaf switches of the network fabric. In such a scenario, VO queues are created for each egress port of each leaf switch. The number of VO queues in each leaf switch is equal to the number of egress ports in the network fabric. The elements depicted in FIG. 4 may also be interchangeable with other elements of FIGS. 1 - 3 and 5 - 8 as required to realize a particularly desired embodiment.

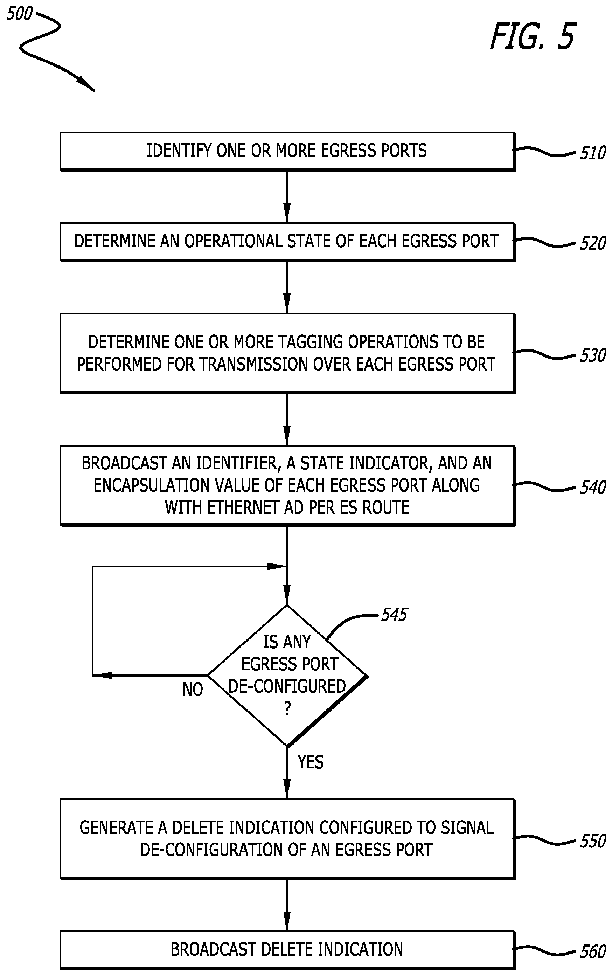

Referring to FIG. 5, a process 500 for facilitating VO queue implementation by egress switches in accordance with various embodiments of the disclosure is shown. In many embodiments, the process 500 may identify one or more egress ports (block 510). The one or more egress ports may be present (e.g., configured) in a network device (e.g., a leaf switch). Each egress port has a unique identifier (e.g., SPID). In a number of embodiments, the SPID is a 32-bit integer.

In a variety of embodiments, the process 500 may determine an operational state of each egress port (block 520). The operational state may be active or inactive. A state indicator may be indicative of the operational state of each egress port. In some embodiments, the state indicator is an 8-bit integer.

In more embodiments, the process 500 may determine one or more tagging operations to be performed for transmission over each egress port (block 530). In additional embodiments, the one or more tagging operations may correspond to VLAN acrobats (e.g., VLAN-tag translation, double-tag or QinQ imposition, or the like). An encapsulation value may be indicative of the one or more tagging operations to be performed for transmission over each egress port. In further embodiments, the encapsulation value is a 32-bit integer.

In still more embodiments, the process 500 may broadcast the identifier, the state indicator, and the encapsulation value of each egress port along with Ethernet AD per ES route (block 540). The Ethernet AD per ES route is a route type-1 EVPN route. The broadcast (e.g., advertisement) of the Ethernet AD per ES route along with the SPIDs, state indicators, and encapsulation values enables the detection of the egress ports by other leaf switches within the network fabric. The broadcast may be executed in two ways. In still further embodiments, the SPIDs, state indicators, encapsulation values, and the Ethernet AD per ES route are broadcasted by way of an EVPN BGP EC. In still additional embodiments, the SPIDs, state indicators, encapsulation values, and the Ethernet AD per ES route are broadcasted by way of an EVPN BGP attribute.

In some more embodiments, the process 500 may determine whether any egress port is de-configured (block 545). The de-configuration of an egress port may correspond to the removal of the configuration settings that govern how data packets are sent out of the egress on a network device. In certain embodiments, in response to determining that no egress port is de-configured, the process 500 may continue to determine whether any egress port is de-configured (block 545). However, in yet more embodiments, in response to determining that an egress port is de-configured, the process 500 may generate a delete indication configured to signal the de-configuration of the egress port (block 550).

In still yet more embodiments, the process 500 may broadcast the delete indication (block 560). In many further embodiments, the delete indication is broadcasted with the Ethernet AD per ES route. In numerous additional embodiments, in response to the delete indication, a VO queue created for the egress port indicated by the delete indication may be deleted.

Although a specific embodiment for facilitating VO queue implementation by egress switches for carrying out the various steps, processes, methods, and operations described herein is discussed with respect to FIG. 5, any of a variety of systems and/or processes may be utilized in accordance with embodiments of the disclosure. For example, SPIDs, state indicators, and encapsulation values may be broadcasted by other leaf switches of the network fabric. The elements depicted in FIG. 5 may also be interchangeable with other elements of FIGS. 1 - 4 and 6 - 8 as required to realize a particularly desired embodiment.

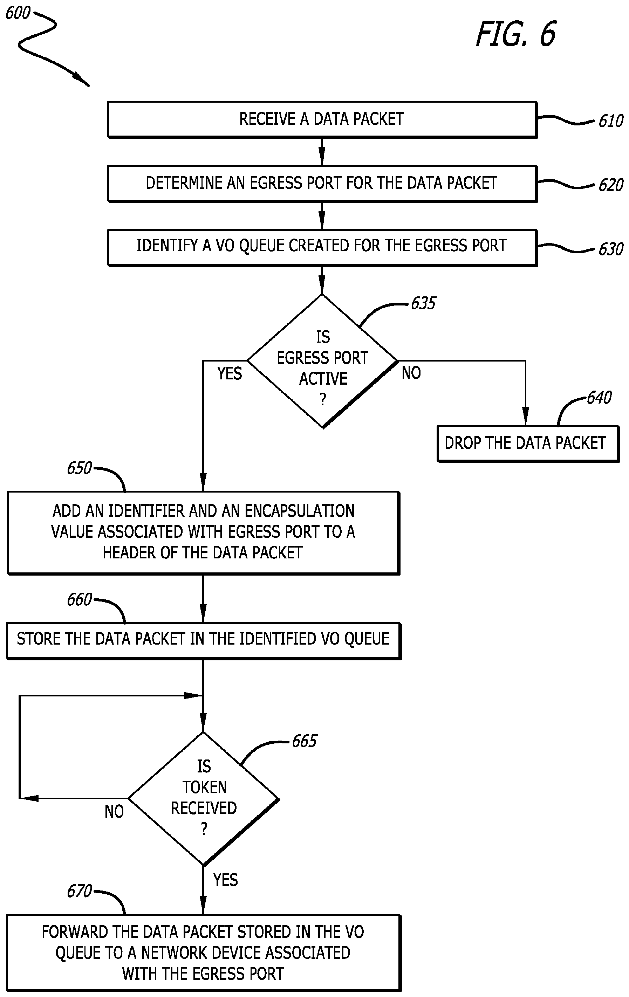

Referring to FIG. 6, a process 600 for implementing data packet traversal at ingress switches in accordance with various embodiments of the disclosure is shown. In many embodiments, the process 600 may receive a data packet (block 610). The data packet may be received from a source endpoint device for communication with a destination endpoint device.

In a number of embodiments, the process may determine an egress port for the data packet (block 620). In a variety of embodiments, the data packet may include one or more fields that may be indicative of the destination endpoint device, the destination egress switch, the destination egress port, or a combination thereof. In some embodiments, the destination egress port for the data packet may be determined by way of the VTEP address.

In more embodiments, the process 600 may identify a VO queue created for the egress port (block 630). The VO queue may be created based on a SPID of the egress port received from an egress switch. The SPID may be received along with the Ethernet AD per ES route.

In additional embodiments, the process 600 may determine whether the egress port is active (block 635). In further embodiments, a first look-up table including a mapping between the VO queue, the egress port, and the operational state of the egress port is maintained at the ingress switch. Based on the determined egress port, the first look-up table is accessed to identify the corresponding VO queue and the operational state.

In still more embodiments, in response to determining that the egress port is inactive, the process 600 may drop the data packet (block 640). The data packet may be dropped as the VO queue associated with the inactive egress port may be disabled for packet storing. This ensures that the data packet does not traverse through the network fabric only to be dropped at the egress switch.

However, in still further embodiments, in response to determining that the egress port is active, the process 600 may add an identifier and an encapsulation value associated with the egress port to a header of the data packet (block 650). The identifier (e.g., a SPID) added to the header may be utilized at the egress switch for forwarding the data packet through the correct egress port. Further, the encapsulation value added to the header may be utilized at the egress switch for executing one or more tagging operations on the data packet to render the data packet suitable for forwarding to the relevant endpoint device.

In still additional embodiments, the process 600 may store the data packet in the identified VO queue (block 660). Thus, the data packet is stored in the VO queue in response to determining that the egress port is operational. The data packet is stored at the ingress switch until the egress switch is available for transmission. This ensures that the congestion in the network fabric (e.g., at spine switches and egress switches) is reduced.

In some more embodiments, the process 600 may determine whether a token is received (block 665). The token may be configured to indicate the availability of the destination leaf switch for data packet transmission. In certain embodiments, the token can correspond to an integer number of bytes for transmission. In yet more embodiments, in response to determining that a token is not received, the process 600 may continue to wait for the receipt of a token (block 665).

However, in still yet more embodiments, in response to determining that a token is received, the process 600 may forward the data packet stored in the VO queue to a network device associated with the egress port (block 670). The data packet may be forwarded to an egress manager of the egress switch. The data packet includes all the necessary information for a smooth and quick egress through the egress switch.

Although a specific embodiment for implementing data packet traversal at ingress switches for carrying out the various steps, processes, methods, and operations described herein is discussed with respect to FIG. 6, any of a variety of systems and/or processes may be utilized in accordance with embodiments of the disclosure. For example, other data packets transmitted from the same source endpoint device may be processed in a similar manner as described above. Further, the data packet transfer between any leaf switches of the network fabric may be processed in the similar manner as described above. The elements depicted in FIG. 6 may also be interchangeable with other elements of FIGS. 1 - 5, 7, and 8 as required to realize a particularly desired embodiment.

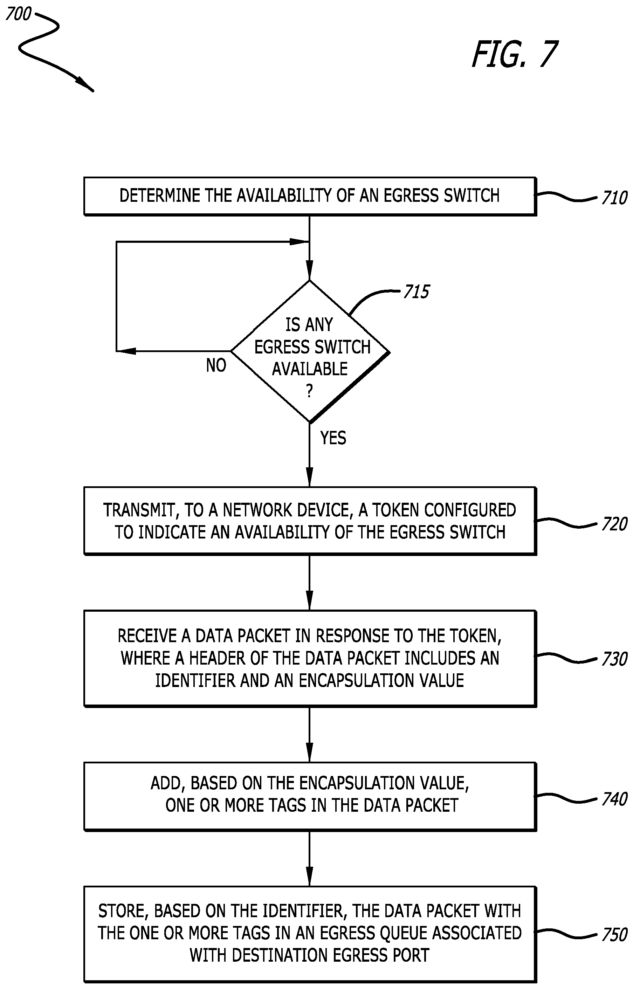

Referring to FIG. 7, a process 700 for implementing data packet traversal at egress switches in accordance with various embodiments of the disclosure is shown. In many embodiments, the process 700 may determine the availability of an egress switch (block 710). In a number of embodiments, the availability determination is executed in a periodic manner. In a variety of embodiments, the availability determination is executed in response to one or more triggers (e.g., reception of data packets at ingress switches).

In some embodiments, the process 700 may determine whether the egress switch is available (block 715). In more embodiments, in response to determining that the egress switch is not available, the process 700 may continue to wait until the egress switch is available (block 715). While the egress switch is not available, the corresponding data packets remain at the ingress switches.

However, in additional embodiments, in response to determining that the egress switch is available, the process 700 may transmit, to a network device, a token configured to indicate an availability of the egress switch (block 720). In further embodiments, the token can correspond to an integer number of bytes for transmission. The token acts as an initiator for data packet processing at the egress switch.

In still more embodiments, the process 700 may receive a data packet in response to the token, where a header of the data packet includes an identifier and an encapsulation value (block 730). The identifier corresponds to a SPID of an egress port of the egress switch. The encapsulation value is indicative of one or more tagging operations to be performed for transmission over the egress port. In still further embodiments, at the egress switch, first and second look-up tables are maintained. The second look-up table includes a mapping between the encapsulation values and tagging operations. The third look-up table includes a mapping between the SPIDs, the egress ports, and the egress queues. Each egress port may be associated with an egress queue that is configured to store data packets prior to the egress via the egress port.

In still additional embodiments, the process 700 may add, based on the encapsulation value, one or more tags in the data packet (block 740). Based on the received encapsulation value, the second look-up table is accessed to identify the corresponding tagging operations. The addition of the one or more tags renders the data packet suitable for forwarding to the relevant endpoint device.

In some more embodiments, the process 700 may store, based on the identifier, the data packet with the one or more tags in the egress queue associated with the destination egress port (block 750). Based on the received identifier, the third look-up table is accessed to identify the destination egress port and associated egress queue. The data packet may then be forwarded from the egress queue to the relevant endpoint device via the egress port. Thus, at the egress switch, the inclusion of SPIDs and encapsulation values in the headers of the data packets received from ingress switches ensures smooth and quick processing of data packets. Consequently, the congestion in the network fabric is further reduced.

Although a specific embodiment for implementing data packet traversal at egress switches for carrying out the various steps, processes, methods, and operations described herein is discussed with respect to FIG. 7, any of a variety of systems and/or processes may be utilized in accordance with embodiments of the disclosure. For example, other data packets at the same egress switch may be processed in the similar manner as described above. Further, each data packet at other egress switches may be processed in the similar manner as described above. The elements depicted in FIG. 7 may also be interchangeable with other elements of FIGS. 1 - 6 and 8 as required to realize a particularly desired embodiment.

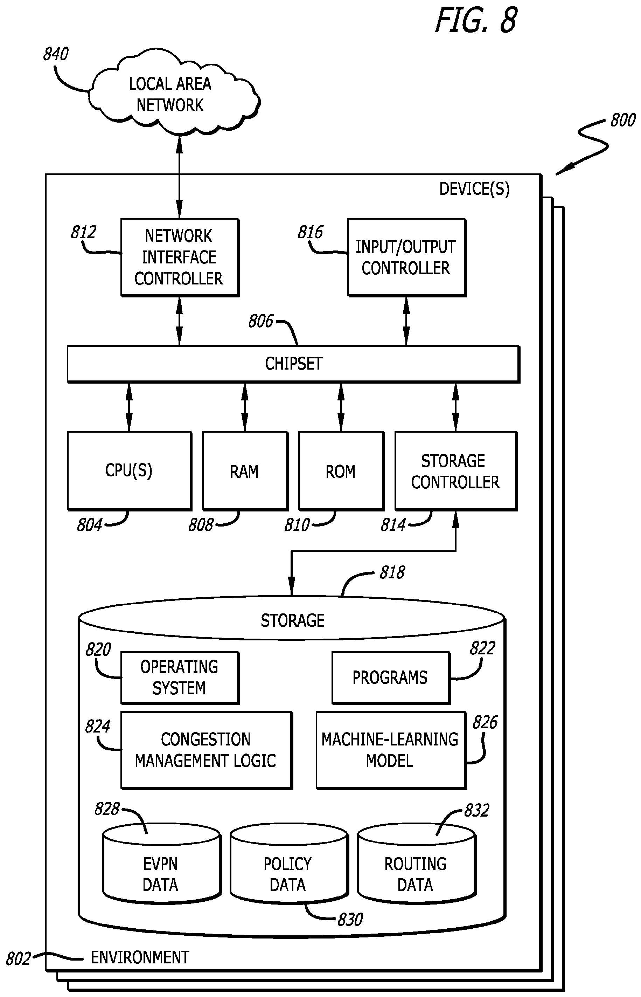

Referring to FIG. 8, a conceptual block diagram for one or more devices 800 capable of executing components and logic for implementing the functionality and embodiments described above is shown. The embodiment of the conceptual block diagram depicted in FIG. 8 can illustrate a conventional server computer, workstation, desktop computer, laptop, tablet, network appliance, e-reader, smartphone, or other computing device, and can be utilized to execute any of the application and/or logic components presented herein. The device 800 may, in some examples, correspond to physical devices or to virtual resources described herein.

In many embodiments, the device 800 may include an environment 802 such as a baseboard or "motherboard," in physical embodiments that can be configured as a printed circuit board with a multitude of components or devices connected by way of a system bus or other electrical communication paths. Conceptually, in virtualized embodiments, the environment 802 may be a virtual environment that encompasses and executes the remaining components and resources of the device 800. In more embodiments, one or more processors 804, such as, but not limited to, central processing units ("CPUs") can be configured to operate in conjunction with a chipset 806. The processor(s) 804 can be standard programmable CPUs that perform arithmetic and logical operations necessary for the operation of the device 800.

In additional embodiments, the processor(s) 804 can perform one or more operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

In certain embodiments, the chipset 806 may provide an interface between the processor(s) 804 and the remainder of the components and devices within the environment 802. The chipset 806 can provide an interface to random-access memory ("RAM") 808, which can be used as the main memory in the device 800 in some embodiments. The chipset 806 can further be configured to provide an interface to a computer-readable storage medium such as read-only memory ("ROM") 810 or Non-volatile RAM ("NVRAM") for storing basic routines that can help with various tasks such as, but not limited to, starting up the device 800 and/or transferring information between the various components and devices. The ROM 810 or NVRAM can also store other application components necessary for the operation of the device 800 in accordance with various embodiments described herein.

Different embodiments of the device 800 can be configured to operate in a networked environment using logical connections to remote computing devices and computer systems through a network, such as the network 840. The chipset 806 can include functionality for providing network connectivity through a network interface controller ("NIC") 812, which may comprise a gigabit Ethernet adapter or similar component. The NIC 812 can be capable of connecting the device 800 to other devices over the network 840. It is contemplated that multiple NICs 812 may be present in the device 800, connecting the device to other types of networks and remote systems.

In further embodiments, the device 800 can be connected to a storage 818 that provides non-volatile storage for data accessible by the device 800. The storage 818 can, for example, store an operating system 820, applications 822, and data 828, 830, and 832, which are described in greater detail below. The storage 818 can be connected to the environment 802 through a storage controller 814 connected to the chipset 806. In certain embodiments, the storage 818 can consist of one or more physical storage units. The storage controller 814 can interface with the physical storage units through a serial attached SCSI ("SAS") interface, a serial advanced technology attachment ("SATA") interface, a fiber channel ("FC") interface, or other type of interface for physically connecting and transferring data between computers and physical storage units.

The device 800 can store data within the storage 818 by transforming the physical state of the physical storage units to reflect the information being stored. The specific transformation of physical state can depend on various factors. Examples of such factors can include, but are not limited to, the technology used to implement the physical storage units, whether the storage 818 is characterized as primary or secondary storage, and the like.

For example, the device 800 can store information within the storage 818 by issuing instructions through the storage controller 814 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit, or the like. Other transformations of physical media are possible without departing from the scope and spirit of the present description, with the foregoing examples provided only to facilitate this description. The device 800 can further read or access information from the storage 818 by detecting the physical states or characteristics of one or more particular locations within the physical storage units.

In addition to the storage 818 described above, the device 800 can have access to other computer-readable storage media to store and retrieve information, such as program modules, data structures, or other data. It should be appreciated by those skilled in the art that computer-readable storage media is any available media that provides for the non-transitory storage of data and that can be accessed by the device 800. In some examples, the operations performed by a cloud computing network, and or any components included therein, may be supported by one or more devices similar to device 800. Stated otherwise, some or all of the operations performed by the cloud computing network, and or any components included therein, may be performed by one or more devices 800 operating in a cloud-based arrangement.

By way of example, and not limitation, computer-readable storage media can include volatile and non-volatile, removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CDROM"), digital versatile disk ("DVD"), high definition DVD ("HD-DVD"), BLU-RAY, or other optical storage, magnetic cassettes, magnetic tape, magnetic disk storage or other magnetic storage devices, or any other medium that can be used to store the desired information in a non-transitory fashion.

As mentioned briefly above, the storage 818 can store an operating system 820 utilized to control the operation of the device 800. According to one embodiment, the operating system comprises the LINUX operating system. According to another embodiment, the operating system comprises the WINDOWS^{®} SERVER operating system from MICROSOFT Corporation of Redmond, Washington. According to further embodiments, the operating system can comprise the UNIX operating system or one of its variants. It should be appreciated that other operating systems can also be utilized. The storage 818 can store other system or application programs and data utilized by the device 800.

In various embodiments, the storage 818 or other computer-readable storage media is encoded with computer-executable instructions which, when loaded into the device 800, may transform it from a general-purpose computing system into a special-purpose computer capable of implementing the embodiments described herein. These computer-executable instructions may be stored as application 822 and transform the device 800 by specifying how the processor(s) 804 can transition between states, as described above. In some embodiments, the device 800 has access to computer-readable storage media storing computer-executable instructions which, when executed by the device 800, perform the various processes described above with regard to FIGS. 1 - 7. In more embodiments, the device 800 can also include computer-readable storage media having instructions stored thereupon for performing any of the other computer-implemented operations described herein.

In still further embodiments, the device 800 can also include one or more input/output controllers 816 for receiving and processing input from a number of input devices, such as a keyboard, a mouse, a touchpad, a touch screen, an electronic stylus, or other type of input device. Similarly, an input/output controller 816 can be configured to provide output to a display, such as a computer monitor, a flat panel display, a digital projector, a printer, or other type of output device. Those skilled in the art will recognize that the device 800 might not include all of the components shown in FIG. 8, and can include other components that are not explicitly shown in FIG. 8, or might utilize an architecture completely different than that shown in FIG. 8.

As described above, the device 800 may support a virtualization layer, such as one or more virtual resources executing on the device 800. In some examples, the virtualization layer may be supported by a hypervisor that provides one or more VMs running on the device 800 to perform functions described herein. The virtualization layer may generally support a virtual resource that performs at least a portion of the techniques described herein.

In many embodiments, the device 800 can include a congestion management logic 824 that can be configured to perform one or more of the various steps, processes, operations, and/or other methods that are described above. Often, the congestion management logic 824 can be a set of instructions stored within a non-volatile memory that, when executed by the processor(s)/controller(s) 804 can carry out these steps, etc. In some embodiments, the congestion management logic 824 may be a client application that resides on a network-connected device, such as, but not limited to, a server, switch, personal or mobile computing device, or an access point. In certain embodiments, the congestion management logic 824 can detect egress ports at each leaf switch of the network fabric and create a VO queue for each egress port at an ingress switch. When a data packet is received from an endpoint device, the congestion management logic 824 can determine a destination egress port for the data packet, identify a VO queue created for the destination egress port, determine an operational state of the destination egress port, and store the data packet in the identified VO queue in response to the destination egress port being operational. Prior to storing the data packet in the identified VO queue, the congestion management logic 824 can add a SPID and an encapsulation value associated with the destination egress port to a header of the data packet. The data packet is stored at the ingress switch until the egress switch is available for data transmission. When the egress switch is available, the congestion management logic 824 can receive the data packet at the egress switch, add one or more tags in the data packet based on the encapsulation value, and store the data packet with the one or more tags in an egress queue associated with the destination egress port. The egress queue may be identified based on the SPID. The data packet may then be forwarded to the relevant endpoint device by way of the destination egress port. By storing the data packet at the ingress switch until the egress switch is available for transmission, and by equipping the data packet with all the necessary information for a smooth and quick egress through the egress switch, the congestion management logic 824 may thus ensure that the congestion in the network fabric is significantly reduced.

In a number of embodiments, the storage 818 can include EVPN data 828. The EVPN data 828 may include the Ethernet AD per ES routes, SPIDs, state indicators, and encapsulation values. The Ethernet AD per ES routes are EVPN type-1 routes. The SPIDs are unique to each port of the network device. The state indicators indicate the operational states of various egress ports. The encapsulation values indicate the tagging operations to be performed on data packets to render them suitable for forwarding to the relevant endpoint devices.

In various embodiments, the storage 818 can include policy data 830. In several embodiments, the policy data 830 refers to rules, configurations, or guidelines that dictate how network resources are accessed, managed, and controlled within an organization or system. These policies are typically defined to ensure security, compliance, performance, and efficient resource allocation. Implementing and enforcing these policies typically involves the use of network management tools, such as firewalls, routers, switches, and network monitoring software, as well as policy enforcement mechanisms such as access control lists and policy-based routing.

In a number of embodiments, the storage 818 can include routing data 832. In some embodiments, routing data 832 can include information, for example, routing tables. The routing table may contain various entries that map destination IP addresses to the next hop or outgoing ports. Routing tables enable the device 800 to make packet forwarding decisions. The MAC address table is an example of a routing table. MAC address table may include destination MAC addresses mapped to corresponding switch ports. The routing data 832 may further store a mapping between IP addresses and MAC addresses within a network. Such mapping may be utilized to translate IP addresses to MAC addresses for proper forwarding of packets.

Finally, in many embodiments, data may be processed into a format usable by a machine-learning model 826 (e.g., feature vectors), and or other pre-processing techniques. The machine-learning ("ML") model 826 may be any type of ML model, such as supervised models, reinforcement models, and/or unsupervised models. The ML model 826 may include one or more of linear regression models, logistic regression models, decision trees, Naïve Bayes models, neural networks, k-means cluster models, random forest models, and/or other types of ML models 826. The ML model 826 may be configured to learn de-configurability patterns of egress ports based on data related to historical delete indications and predict the egress port de-configuration at any time instance. Such predictions may be utilized to anticipate VO queue deletions.

The ML model(s) 826 can be configured to generate inferences to make predictions or draw conclusions from data. An inference can be considered the output of a process of applying a model to new data. This can occur by learning from data and using that learning to predict future outcomes. These predictions are based on patterns and relationships discovered within the data. To generate an inference, the trained model can take input data and produce a prediction or a decision. The input data can be in various forms, such as images, audio, text, or numerical data, depending on the type of problem the model was trained to solve. The output of the model can also vary depending on the problem, and can be a single number, a probability distribution, a set of labels, a decision about an action to take, etc. Ground truth for the ML model(s) 826 may be generated by human/administrator verifications or may compare predicted outcomes with actual outcomes.

Although a specific embodiment for a device suitable for configuration with an INC logic for carrying out the various steps, processes, methods, and operations described herein is discussed with respect to FIG. 8, any of a variety of systems and/or processes may be utilized in accordance with embodiments of the disclosure. For example, the device 800 may be in a virtual environment such as a cloud-based network administration suite, or it may be distributed across a variety of network devices or switches. The elements depicted in FIG. 8 may also be interchangeable with other elements of FIGS. 1 - 7 as required to realize a particularly desired embodiment.

Examples are set out in the following numbered clauses:
1. A device, comprising:
   a processor; a network interface controller configured to provide access to a network; and a memory communicatively coupled to the processor, wherein the memory comprises a congestion management logic that is configured to:
   receive a set of identifiers from at least one network device;
   detect, based on the set of identifiers, one or more egress ports associated with the at least one network device; and
   create, in response to the detection of the one or more egress ports, a virtual output ("VO") queue for at least one egress port of the one or more egress ports.
2. The device of clause 1, wherein an identifier of the set of identifiers corresponds to a system port identifier of an egress port of the one or more egress ports.
3. The device of clause 1, wherein the set of identifiers is received with an Ethernet Auto-Discovery (AD) per Ethernet Segment (ES) route.
4. The device of clause 3, wherein the set of identifiers is received with the Ethernet AD per ES route by way of one of an Ethernet Virtual Private Network ("EVPN") border gateway protocol ("BGP") extended community or an EVPN BGP attribute.
5. The device of clause 1, wherein the congestion management logic is further configured to receive a state indicator from the at least one network device; and detect, based on the state indicator, an operational state of the at least one egress port.
6. The device of clause 5, wherein the state indicator is received with the set of identifiers and an Ethernet AD per ES route.
7. The device of clause 6, wherein the state indicator is received with the set of identifiers and the Ethernet AD per ES route by way of one of an EVPN BGP extended community or an EVPN BGP attribute.
8. The device of clause 1, wherein the congestion management logic is further configured to receive an encapsulation value from the at least one network device, and wherein the encapsulation value is configured to signal one or more tagging operations to be performed for egress port transmission.
9. The device of clause 8, wherein the encapsulation value is received with the set of identifiers and an Ethernet AD per ES route.
10. The device of clause 9, wherein the encapsulation value is received with the set of identifiers and the Ethernet AD per ES route by way of one of an EVPN BGP extended community or an EVPN BGP attribute.
11. The device of clause 1, wherein the congestion management logic is further configured to: receive a data packet associated with the at least one egress port; identify the VO queue created for the at least one egress port; and store the data packet in the VO queue.
12. The device of clause 11, wherein in response to receiving the data packet, the congestion management logic is further configured to determine an operational state of the at least one egress port.
13. The device of clause 12, wherein the data packet is stored in the VO queue in response to determining that the at least one egress port is operational.
14. The device of clause 11, wherein in response to receiving the data packet and prior to storing the data packet in the VO queue, the congestion management logic is further configured to add one of the set of identifiers associated with the at least one egress port to a header of the data packet.
15. The device of clause 11, wherein in response to receiving the data packet and prior to storing the data packet in the VO queue, the congestion management logic is further configured to add an encapsulation value associated with the at least one egress port to a header of the data packet.
16. The device of clause 11, wherein the congestion management logic is further configured to: receive a token for transmission of the stored data packet; and forward the data packet stored in the VO queue to the at least one network device.
17. The device of clause 1, wherein the congestion management logic is further configured to: receive a delete indication, wherein the delete indication is configured to signal de-configuration of the at least one egress port; and delete, in response to the delete indication, the VO queue created for the at least one egress port.
18. The device of clause 1, wherein the at least one egress port is one of a physical port or a logical port.
19. A device, comprising: a processor; a network interface controller configured to provide access to a network; at least one egress port; an egress queue associated with the at least one egress port; and a memory communicatively coupled to the processor, wherein the memory comprises a congestion management logic that is configured to:
   receive a data packet, wherein a header of the data packet comprises an identifier and an encapsulation value; add one or more tags in the data packet based on the encapsulation value; and store, based on the identifier, the data packet with the one or more tags in the egress queue associated with the at least one egress port.
20. A method, comprising:
   receiving a set of identifiers from at least one network device;
   detecting, based on the set of identifiers, one or more egress ports associated with the at least one network device; and
   creating, in response to the detection of the one or more egress ports, a virtual output (VO) queue for at least one egress port of the one or more egress ports.

In summary, devices, systems, methods, and processes for fabric congestion management are described herein. At each ingress switch, virtual output ("VO") queues are created for egress ports based on identifiers, state indicators, and encapsulation values of the egress ports received via an Ethernet Virtual Private Network ("EVPN") control plane. When a data packet is received at the ingress switch, an egress port for the data packet is determined, an identifier and an encapsulation value of the egress port are added to the data packet, and the data packet is stored in a corresponding VO queue. The data packet remains at the ingress switch until an egress switch is available. At the egress switch, one or more tags are added in the data packet based on the encapsulation value, whereas the destination egress port is identified based on the identifier. Thus, a quick egress through the egress switch is achieved.

Although the present disclosure has been described in certain specific aspects, many additional modifications and variations would be apparent to those skilled in the art. In particular, any of the various processes described above can be performed in alternative sequences and/or in parallel (on the same or on different computing devices) in order to achieve similar results in a manner that is more appropriate to the requirements of a specific application. It is therefore to be understood that the present disclosure can be practiced other than specifically described without departing from the scope and spirit of the present disclosure. Thus, embodiments of the present disclosure should be considered in all respects as illustrative and not restrictive. It will be evident to the person skilled in the art to freely combine several or all of the embodiments discussed here as deemed suitable for a specific application of the disclosure. Throughout this disclosure, terms like "advantageous", "exemplary" or "example" indicate elements or dimensions which are particularly suitable (but not essential) to the disclosure or an embodiment thereof and may be modified wherever deemed suitable by the skilled person, except where expressly required. Accordingly, the scope of the disclosure should be determined not by the embodiments illustrated, but by the appended claims and their equivalents.

Any reference to an element being made in the singular is not intended to mean "one and only one" unless explicitly so stated, but rather "one or more." All structural and functional equivalents to the elements of the above-described preferred embodiment and additional embodiments as regarded by those of ordinary skill in the art are hereby expressly incorporated by reference and are intended to be encompassed by the present claims.

Moreover, no requirement exists for a system or method to address each and every problem sought to be resolved by the present disclosure, for solutions to such problems to be encompassed by the present claims. Furthermore, no element, component, or method step in the present disclosure is intended to be dedicated to the public regardless of whether the element, component, or method step is explicitly recited in the claims. Various changes and modifications in form, material, workpiece, and fabrication material detail can be made, without departing from the spirit and scope of the present disclosure, as set forth in the appended claims, as might be apparent to those of ordinary skill in the art, are also encompassed by the present disclosure.

## Claims

1. A device, comprising:
means for receiving a set of identifiers from at least one network device;
means for detecting, based on the set of identifiers, one or more egress ports associated with the at least one network device; and
means for creating, in response to the detection of the one or more egress ports, a virtual output ("VO") queue for at least one egress port of the one or more egress ports.

2. The device of claim 1, wherein an identifier of the set of identifiers corresponds to a system port identifier of an egress port of the one or more egress ports.

3. The device of claim 1 or 2, wherein the set of identifiers is received with an Ethernet Auto-Discovery (AD) per Ethernet Segment (ES) route, optionally wherein the set of identifiers is received with the Ethernet AD per ES route by way of one of an Ethernet Virtual Private Network ("EVPN") border gateway protocol ("BGP") extended community or an EVPN BGP attribute.

4. The device of any of claims 1 to 3, further comprising:
means for receiving a state indicator from the at least one network device; and
means for detecting, based on the state indicator, an operational state of the at least one egress port.

5. The device of claim 4, wherein the state indicator is received with the set of identifiers and an Ethernet AD per ES route, optionally wherein the state indicator is received by way of one of an EVPN BGP extended community or an EVPN BGP attribute.

6. The device of any of claims 1 to 5, further comprising means for receiving an encapsulation value from the at least one network device, optionally wherein the encapsulation value is configured to signal one or more tagging operations to be performed for egress port transmission.

7. The device of claim 6, wherein the encapsulation value is received with the set of identifiers and an Ethernet AD per ES route, optionally wherein the encapsulation value is received by way of one of an EVPN BGP extended community or an EVPN BGP attribute.

8. The device of any of claims 1 to 6, further comprising:
means for receiving a data packet associated with the at least one egress port;
means for identifying the VO queue created for the at least one egress port; and
means for storing the data packet in the VO queue.

9. The device of claim 8, further comprising means for determining, in response to receiving the data packet, an operational state of the at least one egress port, optionally wherein the data packet is stored in the VO queue in response to determining that the at least one egress port is operational.

10. The device of claim 8, further comprising means for adding one of the set of identifiers associated with the at least one egress port to a header of the data packet or means for adding an encapsulation value associated with the at least one egress port to a header of the data packet, in response to receiving the data packet and prior to storing the data packet in the VO queue.

11. The device of any of claims 8 to 10, further comprising:
means for receiving a token for transmission of the stored data packet; and
means for forwarding the data packet stored in the VO queue to the at least one network device.

12. The device of any of claims 1 to 11, further comprising:
means for receiving a delete indication, wherein the delete indication is configured to signal de-configuration of the at least one egress port; and
means for deleting, in response to the delete indication, the VO queue created for the at least one egress port.

13. The device of any of claims 1 to 12, wherein the at least one egress port is one of a physical port or a logical port.

14. A device having a network interface controller configured to provide access to a network, at least one egress port and an egress queue associated with the at least one egress port, the device comprising:
means for receiving a data packet, wherein a header of the data packet comprises an identifier and an encapsulation value;
means for adding one or more tags in the data packet based on the encapsulation value; and
means for storing, based on the identifier, the data packet with the one or more tags in the egress queue associated with the at least one egress port.

15. A method, comprising:
receiving a set of identifiers from at least one network device;
detecting, based on the set of identifiers, one or more egress ports associated with the at least one network device; and
creating, in response to the detection of the one or more egress ports, a virtual output (VO) queue for at least one egress port of the one or more egress ports.

16. A method comprising:
receiving a data packet, wherein a header of the data packet comprises an identifier and an encapsulation value;
adding one or more tags in the data packet based on the encapsulation value; and
storing, based on the identifier, the data packet with the one or more tags in the egress queue associated with the at least one egress port.
